# EUROPÄISCHE PATENTANMELDUNG

(11) **EP 4 711 157 A1**
(43) Veröffentlichungstag der Anmeldung: **18.03.2026**
(21) Anmeldenummer: 25199521.3
(22) Anmeldetag: 02.09.2025
(51) Int. Cl.: B60D 1/62, B62D 53/08

(54) **KUPPLUNGSVORRICHTUNG FÜR EIN GESPANN**

(30) Priorität: 16.09.2024 DE 102024126549
(71) Anmelder: Rühlicke GmbH, 30179 Hannover (DE)
(72) Erfinder: Stefan, Rühlicke, 30175 Hannover (DE)
(74) Vertreter: Holz, Christian

(57) **Zusammenfassung**

Kupplungsvorrichtung (1; 2) für einen Fahrzeugverbund (3, 4), welche sich entlang einer Längsachse (X) erstreckt, mit einem Verschleißdetektionsmittel, welches aufweist:
• ein Verschleißelement (11c, 12c; 21c), welches senkrecht zur Längsachse (X) ausgerichtet derart in und/oder an der Kupplungsvorrichtung (1; 2) angeordnet ist, sodass ein Verschleiß der Kupplungsvorrichtung (1; 2) senkrecht zur Längsachse (X) gleichermaßen oder ausschließlich das Verschleißelement (11c; 12c; 21c) verschleißt,
wobei das Verschleißelement (11c, 12c; 21c) in der Umfangsrichtung (U) um die Kupplungsvorrichtung (1; 2) herum angeordnet ist
• einen Hohlraum (11a, 11b, 12a, 12b, 14c; 21a, 21b, 24), welcher sich in der Umfangsrichtung (U) korrespondierend zum Verschleißelement (11c, 12c; 21c) erstreckt,
wobei der Hohlraum (11a, 11b, 12a, 12b, 14c; 21a, 21b, 24) vom Verschleißelement (11c, 12c; 21c) fluiddicht verschlossen wird, und
• einen Drucksensor (16; 26) zum Erfassen des Drucks des Fluids im Hohlraum (11a, 11b, 12a, 12b, 14c; 21a, 21b, 24),
wobei das Verschleißelement (11c, 12c; 21c) senkrecht zur Längsachse (X) derart dimensioniert ist, sodass das Fluid durch eine verschleißbedingt erzeugte Durchgangsöffnung des Verschleißelements (11c, 12c; 21c) entweichen kann, wenn eine Verschleißgrenze der Kupplungsvorrichtung (1; 2) an dieser Stelle der Kupplungsvorrichtung (1; 2) erreicht wird.

## Beschreibung

Die vorliegende Erfindung betrifft eine Kupplungsvorrichtung für ein Gespann und insbesondere einen Zugsattelzapfen für einen Sattelauflieger eines Sattelkraftfahrzeugs sowie einen Kupplungsbolzen für ein Zugfahrzeug eines Lastzugs.

Zum Transport von Gütern werden heutzutage verschiedene Arten von Kraftfahrzeugen als Straßenfahrzeuge verwendet. Hierzu gehören auch die Gespanne, welche ein selbstfahrendes Fahrzeug mit einem Fahrantrieb als Zugfahrzeug und wenigstens ein gezogenes Fahrzeug aufweisen. Ein Gespann kann auch als Fahrzeugverbund mit einem in Zug-, Fahrt- oder Bewegungsrichtung vorderen Fahrzeug und mit einem in Zug-, Fahrt- oder Bewegungsrichtung hinteren Fahrzeug bezeichnet werden. Ein Gespann kann als Sattelkraftfahrzeug bzw. umgangssprachlich auch als Sattelzug bezeichnet werden, falls eine Sattelzugmaschine einen Sattelauflieger ziehen kann. Ein Gespann kann als Lastzug bezeichnet werden, falls ein Lastkraftwagen einen Anhänger ziehen kann.

Ein Sattelkraftfahrzeug ist somit ein Gespann aus einer Sattelzugmaschine, welche auch als Sattelschlepper bezeichnet werden kann, und aus einem Sattelauflieger, welcher auch als Sattelanhänger, als Auflieger oder als Trailer bezeichnet werden kann. Bei der Sattelzugmaschine handelt es sich um einen verkürzten Lastkraftwagen ohne Ladefläche, dessen Rahmen, Fahrgestell bzw. Chassis stattdessen eine Sattelkupplung zur Aufnahme einer korrespondierenden Befestigung des Sattelaufliegers aufweist. Der Sattelauflieger ist ein vergleichsweise langer Anhänger ohne vordere Achse, welcher mit seinem vorderen Bereich, in Fahrtrichtung betrachtet, von oben auf der Sattelkupplung des Rahmens der Sattelzugmaschine aufliegt und von der Sattelkupplung drehbeweglich gehalten wird. Die drehbewegliche Verbindung zwischen Sattelzugmaschine und Sattelauflieger wird durch einen Bolzen - Zugsattelzapfen, Königsbolzen oder Königszapfen genannt - als Befestigung des Sattelaufliegers ermöglicht, welcher von der Sattelkupplung gehalten wird. Der zylindrische und rotationssymmetrische Zugsattelzapfen ist hierzu im vorderen Bereich des Rahmens feststehend und nach unten zeigend angeordnet.

Zum Ankoppeln bzw. zum Aufsatteln des Sattelaufliegers an die Sattelzugmaschine wird die Sattelkupplung nach hinten zeigend geöffnet und die Sattelzugmaschine fährt rückwärts an den auf Sattelstützen aufgestellten Sattelanhänger heran, sodass sich der Rahmen der Sattelzugmaschine mit der Sattelkupplung unter den vorderen Bereich des Rahmens des Sattelaufliegers schiebt und der Zugsattelzapfen durch die Öffnung der Sattelkupplung in dessen Innenraum gelangt. Dann hält die Sattelzugmaschine an und die Öffnung der Sattelkupplung wird geschlossen und verriegelt. Das Gespann ist fahrbereit. Das Abkuppeln bzw. das Absatteln erfolgt umgekehrt.

Der feststehende Zugsattelzapfen des Sattelaufliegers ermöglicht somit nicht nur einen formschlüssigen Halt gegenüber der geschlossen Sattelkupplung der Sattelzugmaschine entgegen der Fahrt- bzw. Zugrichtung, sondern auch eine rotatorische Relativbewegung zwischen Sattelauflieger und Sattelzugmaschine, so dass der Sattelauflieger der Bewegung der Sattelzugmaschine auch bei Kurvenfahrten folgen kann. Über die drehbewegliche Verbindung zwischen Sattelkupplung der Sattelzugmaschine und Zugsattelzapfen des Sattelaufliegers hinweg kann ferner eine elektrische sowie hydraulische Versorgung des Sattelaufliegers seitens der Sattelzugmaschine erfolgen, wie beispielsweise in der DE 20 2007 014 589 U1 beschrieben.

Durch diese Relativbewegungen des Zugsattelzapfens und der Sattelkupplung zueinander kommt es im Laufe des Betriebes des Sattelkraftfahrzeugs zu einem Abrieb des Materials wenigstens des Zugsattelzapfens dort, wo der Zugsattelzapfen mit der Sattelkupplung in Kontakt kommt bzw. an der Sattelkupplung reibt. Dieser Abrieb bzw. dieser Verschleiß des Zugsattelzapfens reduziert dessen Materialstärke und schwächt somit den Zugsattelzapfen als Übertragungselement im Kraftfluss zwischen Sattelzugmaschine und Sattelauflieger. Dies kann zu einem Abriss des Zugsattelzapfens führen.

Daher ist es für die Verkehrssicherheit eines Sattelkraftfahrzeugs erforderlich, regelmäßig, wie zum Beispiel in bestimmten Zeitabständen wie zum Beispiel halbjährig oder in Abhängigkeit der Benutzung des Sattelkraftfahrzeugs zum Beispiel in Abhängigkeit der gefahrenen Kilometer, den Zugsattelzapfen auf Verschleiß zu kontrollieren. Dies erfolgt bisher manuell, d. h. durch eine Person, welche mittels einer mechanischen Prüflehre bzw. Schablone die Maße des Zugsattelzapfens an bestimmten vorgegebenen Stellen misst um festzustellen, ob die gemessenen Maße die entsprechenden Vorgaben noch erfüllen oder nicht, d. h. der Zugsattelzapfen bereits übermäßig stark verschlissen ist und ausgetauscht werden muss oder noch nicht.

Nachteilig hieran ist, dass die Beurteilung eines zulässigen oder unzulässigen Verschleißes des Zugsattelzapfens der jeweiligen Person überlassen wird und somit eine gewisse Unsicherheit dahingehend besteht, dass die Beurteilung auch von der Aufmerksamkeit und bzw. oder von der Erfahrung der Person abhängen kann. Dies kann dazu führen, dass ein unzulässig stark verschlissener Zugsattelzapfen weiterhin verwendet wird, was die Verkehrssicherheit des Sattelkraftfahrzeugs gefährden kann. Dies kann ebenso dazu führen, dass ein noch verwendbarer Zugsattelzapfen vorzeitig ausgetauscht wird, was zusätzlichen Aufwand, zusätzliche Kosten und bzw. oder einen unnötigen Ausfall des Sattelkraftfahrzeugs verursachen kann.

Nachteilig ist hieran auch, dass der Verschleiß des Zugsattelzapfens sehr unterschiedlich auftreten kann und somit innerhalb des zulässigen Zeit- bzw. Kilometerintervalls zwischen zwei Verschleißprüfungen bereits ein unzulässig hoher Verschleiß erreicht werden kann, ohne dass dies in diesem Moment festgestellt werden kann. Dies kann ebenfalls die Verkehrssicherheit des Sattelkraftfahrzeugs gefährden.

Vergleichbares gilt für ein Gespann in Form eines Lastzugs aus Lastkraftwagen bzw. aus Zugfahrzeug und Anhänger. Um es nämlich einem Zugfahrzeug zu ermöglichen, einen Anhänger zu ziehen, ist es erforderlich, das Zugfahrzeug und den Anhänger miteinander kraftübertragend und lösbar zu verbinden. Derartige Zugfahrzeuge können zum Beispiel ein Personenkraftwagen (Pkw), ein Lastkraftwagen (Lkw), ein Omnibus, eine Baumaschine, ein forst- oder landwirtschaftliches Fahrzeug, ein Militärfahrzeug oder ein sonstiges Landfahrzeug, insbesondere ein sonstiges Straßenfahrzeug oder Geländefahrzeug, sein. Derartige Zugfahrzeuge können mittels eines eigenen Antriebs bewegt werden bzw. fahren, d.h. können Fahrzeuge mit einem eigenen Antrieb sein. Ein Zugfahrzeug kann wenigstens einen Anhänger als Fahrzeug ohne eigenen Antrieb mit sich mit bewegen bzw. hinter sich her ziehen. Ein Anhänger dient üblicherweise dem Transport von Lasten und kann beispielsweise ein Pkw-Anhänger, ein Lkw-Anhänger, ein Wohnwagen, ein Pferdeanhänger, ein Bootstrailer und dergleichen sein. Anhänger weisen wenigstens eine Achse mit Rädern und häufig wenigstens zwei Achsen mit Rädern auf. Auch Anhänger können für den privaten, sportlichen sowie gewerblichen Gebrauch zum Beispiel im Speditionswesen, im Baugewerbe, in der Landwirtschaft und dergleichen ausgebildet sein.

Die Umsetzung einer lösbaren Verbindung zwischen Zugfahrzeug und Anhänger erfolgt üblicherweise mit einer sogenannten Anhängekupplung zum Anhängen des Anhängers am Zugfahrzeug, welche als System wenigstens zweiteilig ausgebildet ist und jeweils am Zugfahrzeug und am Anhänger eine Kupplungsvorrichtung aufweist, welche dort jeweils gehalten werden und miteinander lösbar verbunden werden können. Mehrere Anhänger können ebenso auf diese Art und Weise lösbar miteinander verbunden werden.

Bekannt sind dabei verschiedene Arten von Anhängekupplungen wie zum Beispiel Bolzenkupplungen und Maulkupplungen bzw. Bolzenkupplungssysteme und Maulkupplungssysteme, bei denen sich ein Schaft bzw. eine Deichsel vom Anhänger zum Zugfahrzeug hin erstreckt und dort am Ende eine Öse als Durchgangsöffnung in der vertikalen Richtung aufweist, welche auch als Zugöse oder als Kupplungsöse bezeichnet werden kann. Am gegenüberliegenden Ende ist der Schaft zum Beispiel als Flansch ausgebildet und feststehend am Gestell des Anhängers mittels Schrauben befestigt. Seitens des Zugfahrzeugs ist bei einer Bolzenkupplung eine Halterung feststehend am Gestell des Zugfahrzeugs befestigt, welche in der vertikalen Richtung zwei Flächen mit jeweils einer Durchgangsöffnung in der vertikalen Richtung aufweist. Die beiden Durchgangsöffnungen sind miteinander fluchtend angeordnet. Die Zugöse des Anhängers kann zwischen den beiden Flächen der Halterung des Zugfahrzeugs aufgenommen werden. Alle drei Durchgangsöffnungen können in der vertikalen Richtung durch einen Bolzen, auch Kupplungsbolzen genannt, miteinander verbunden werden, welcher mittels Verdickung oben auf der oberen Fläche aufliegen und am unteren Ende gesichert werden kann. Vergleichbar kann dies bei einer Maulkupplung bzw. bei einem Maulkupplungssystem erfolgen.

Bei derartigen Anhängekupplungen muss zum Beispiel zwischen dem Innendurchmesser der Zugöse der Anhängerdeichsel und dem Außendurchmesser des Kupplungsbolzens des Zugfahrzeugs ein gewisser Abstand von wenigen Millimetern vorhanden sein, um die jeweilige formschlüssige Verbindung überhaupt vornehmen zu können. Dies führt dazu, dass insbesondere in der Längsrichtung als wesentliche Fahrt-, Bewegungs- oder Zugrichtung ein Spiel vorhanden ist, welches zwar für das Verbinden bzw. für das Ankuppeln erforderlich ist, jedoch im Fahrtbetrieb eine gewisse Relativbewegung im Wesentlichen in der Fahrt-, Bewegungs- oder Zugrichtung zwischen dem Zugfahrzeug und dem Anhänger bzw. zwischen dem Kupplungsbolzen und der Zugöse ermöglicht.

Nachteilig ist an diesem Spiel zwischen dem Kupplungsbolzen und der Zugöse im Fahrtbetrieb, dass die Zugöse und der Kupplungsbolzen aneinander reiben und bzw. oder gegeneinander stoßen können und hieraus aufgrund der vorliegenden Kräfte ein Abrieb bzw. ein Verschleiß an diesen Komponenten resultieren kann. Dieser mechanische Verschleiß kann nicht nur auf die Dauer die Materialstärke des Kupplungsbolzens reduzieren und hierdurch den Kupplungsbolzen als Übertragungselement im Kraftfluss zwischen Anhänger und Zugfahrzeug schwächen, sondern auch zunehmend das Spiel vergrößern, was dann zu größeren Relativbewegungen und hieraus resultierenden stärkeren Kräften mit einem zunehmenden mechanischen Verschleiß führen kann.

Daher ist es auch für die Verkehrssicherheit eines Lastzugs erforderlich, regelmäßig den Kupplungsbolzen des Zugfahrzeugs auf Verschleiß zu kontrollieren, wie zuvor hinsichtlich des Sattelkraftfahrzeugs beschrieben. Die diesbezüglich zuvor hinsichtlich des Sattelkraftfahrzeugs beschrieben Nachteile derartiger bisher bekannter Kontrollen gelten ebenso für einen Lastzug.

Seitens der Anmelderin ist daher aus der WO 2022/218798 A1 ein Zugsattelzapfen für einen Sattelauflieger eines Sattelkraftfahrzeugs bekannt, welcher sich im Wesentlichen entlang einer Längsachse erstreckt. Der Zugsattelzapfen weißt wenigstens ein Verschleißdetektionsmittel auf, welches senkrecht zur Längsachse ausgerichtet derart im Zugsattelzapfen angeordnet ist, sodass ein Verschleiß des Zugsattelzapfens senkrecht zur Längsachse optisch und bzw. oder sensorisch erkannt werden kann. Das Verschleißdetektionsmittel weist wenigstens ein konkretes Verschleißelement auf, welches dem Verschleiß des Zugsattelzapfens gleichermaßen wie der Zugsattelzapfen selbst an dieser Stelle unterliegt.

Seitens der Anmelderin ist ebenso aus der WO 2022/218799 A1 ein Kupplungsbolzen für ein Zugfahrzeug eines Fahrzeugverbundes bekannt, welcher sich im Wesentlichen entlang einer Längsachse erstreckt. Der Kupplungsbolzen weist wenigstens ein Verschleißdetektionsmittel auf, welches senkrecht zur Längsachse ausgerichtet derart im Kupplungsbolzen angeordnet ist, sodass ein Verschleiß des Kupplungsbolzens senkrecht zur Längsachse optisch und bzw. oder sensorisch erkannt werden kann. Das Verschleißdetektionsmittel weist wenigstens ein konkretes Verschleißelement auf, welches dem Verschleiß des Kupplungsbolzens gleichermaßen wie der Kupplungsbolzen selbst an dieser Stelle unterliegt.

Nachteilig an den verwendeten Verschleißdetektionsmittel der WO 2022/218798 A1 sowie der WO 2022/218799 A1 ist, dass das radial ausgerichtete Verschleißelement des Verschleißdetektionsmittels den Verschleiß lediglich punktuell erfassen kann. Dies kann bei einem Verschleißdetektionsmittel, welches sich geradlinig durch den Zugsattelzapfen bzw. durch den Kupplungsbolzen hindurch erstreckt, auch diametral gegenüberliegend mittels eines zweiten Verschleißelements erfolgen. Dies kann jedoch wenig aussagekräftig für den Verschleiß an anderen Stellen des Zugsattelzapfens bzw. des Kupplungsbolzens in Umfangsrichtung sein. Der Zugsattelzapfen und der Kupplungsbolzen können auch gemeinsam bzw. übergeordnet als Kupplungsvorrichtung bezeichnet werden.

Hierzu könnten mehrere Verschleißelemente dieser Art in einer horizontalen Ebene bzw. nur geringfügig entlang der Längsachse zueinander versetzt verwendet werden, um den Verschleiß des Zugsattelzapfens bzw. des Kupplungsbolzens in der Umfangsrichtung an mehr als lediglich an einer Stelle bzw. an mehr als lediglich zwei diametral gegenüberliegenden Stellen des Zugsattelzapfens bzw. des Kupplungsbolzens detektieren zu können. Dies würde jedoch mit zunehmender Anzahl von Verschleißelementen zu einer zunehmenden Schwächung der Stabilität des Zugsattelzapfens bzw. des Kupplungsbolzens führen, da pro Verschleißelement eine Öffnung bzw. eines Durchgangsöffnung ins Innere des Zugsattelzapfens bzw. des Kupplungsbolzens hinein vorzusehen wäre. Dies könnte zu einer derart großen Reduzierung der Stabilität des Zugsattelzapfens bzw. des Kupplungsbolzens führen, dass ein derartiges Verschleißdetektionsmittel unzulässig sein könnte. Auch würden weiterhin lediglich konkrete Stellen des Zugsattelzapfens bzw. des Kupplungsbolzens in Umfangsrichtung abgedeckt und hinsichtlich ihres Verschleißes überwacht werden können, was stets zu Lücken zwischen zwei unmittelbar benachbarten Verschleißelementen in der Umfangsrichtung führen würde, d.h. die Verschleißüberwachung bliebe in der Umfangsrichtung stets lückenbehaftet.

Eine Aufgabe der vorliegenden Erfindung ist es, eine Kupplungsvorrichtung für ein Gespann und insbesondere einen Zugsattelzapfen für einen Sattelauflieger eines Sattelkraftfahrzeugs und bzw. oder einen Kupplungsbolzen für ein Zugfahrzeug eines Lastzugs der eingangs beschriebenen Art bereit zu stellen, sodass die Überprüfung des Verschleißes der Kupplungsvorrichtung bzw. des Zugsattelzapfens und bzw. oder des Kupplungsbolzens vereinfacht und bzw. oder verbessert werden kann. Dies soll insbesondere möglichst bzw. vollständig lückenlos bzw. kontinuierlich in der Umfangsrichtung erfolgen können. Dies soll insbesondere möglichst einfach, verlässlich, bauraumsparend, personenunabhängig und bzw. oder selbststätig erfolgen können. In jedem Fall soll hierdurch insbesondere die Verkehrssicherheit des Gespanns und insbesondere des Sattelkraftfahrzeugs bzw. des Lastzugs verbessert bzw. erhöht werden. Zumindest soll eine Alternative zu bekannten Möglichkeiten zur Überprüfung des Verschleißes der Kupplungsvorrichtung bzw. des Zugsattelzapfens und bzw. oder des Kupplungsbolzens eines Gespanns geschaffen werden.

Die Aufgabe wird erfindungsgemäß durch eine Kupplungsvorrichtung mit den Merkmalen des Patentanspruchs 1gelöst. Vorteilhafte Weiterbildungen sind in den Unteransprüchen beschrieben.

Somit betrifft die vorliegende Erfindung eine Kupplungsvorrichtung für einen Fahrzeugverbund, vorzugsweise einen Zugsattelzapfen für einen Sattelauflieger eines Sattelkraftfahrzeugs oder einen Kupplungsbolzen für ein Zugfahrzeug eines Lastzugs, welche sich im Wesentlichen entlang einer Längsachse erstreckt. Die Kupplungsvorrichtung stellt dabei, wie eingangs beschrieben, einen bolzenartigen, rotationssymmetrischen und üblicherweise metallischen Vorsprung dar, welcher sich vorzugsweise als Zugsattelzapfen von der Unterseite des Fahrgestells eines Sattelaufliegers oder als Kupplungsbolzen seitens eines Zugfahrzeugs in der vertikalen Richtung senkrecht nach unten erstreckt. Die Längsachse der Kupplungsvorrichtung als dessen Achse der Rotationssymmetrie fällt mit der Achse der vertikalen Richtung in kartesischen Koordinaten, d.h. mit der Richtung der Schwerkraft, zusammen, welche sich senkrecht zur horizontalen Ebene erstreckt.

Die Kupplungsvorrichtung weist wenigstens ein Verschleißdetektionsmittel auf, welches senkrecht zur Längsachse ausgerichtet derart in der Kupplungsvorrichtung angeordnet ist, sodass ein Verschleiß der Kupplungsvorrichtung senkrecht zur Längsachse optisch und bzw. oder sensorisch erkannt werden kann.

Erfindungsgemäß weist das Verschleißdetektionsmittel hierzu auf:
- wenigstens ein Verschleißelement, welches senkrecht zur Längsachse ausgerichtet derart in und bzw. oder an der Kupplungsvorrichtung angeordnet ist, sodass ein Verschleiß der Kupplungsvorrichtung senkrecht zur Längsachse gleichermaßen oder ausschließlich das Verschleißelement verschleißt,
   wobei das Verschleißelement in der Umfangsrichtung zumindest abschnittsweise, vorzugsweise vollständig, um die Kupplungsvorrichtung herum angeordnet ist,
- wenigstens einen Hohlraum, welcher sich in der Umfangsrichtung korrespondierend zum Verschleißelement erstreckt,
   wobei der Hohlraum vom Verschleißelement, vorzugsweise senkrecht zur Längsachse, fluiddicht verschlossen wird, und
- wenigstens einen Drucksensor, welcher ausgebildet ist, den Druck des Fluids im Hohlraum zu erfassen,
wobei das Verschleißelement senkrecht zur Längsachse derart dimensioniert ist, sodass das Fluid durch eine verschleißbedingt erzeugte Durchgangsöffnung des Verschleißelements entweichen kann, wenn eine Verschleißgrenze der Kupplungsvorrichtung an dieser Stelle der Kupplungsvorrichtung erreicht wird.

Mit anderen Worten ist zum einen innerhalb der Kontur bzw. innerhalb des Materials der Kupplungsvorrichtung, welche vorzugsweise ein Zugsattelzapfen für einen Sattelauflieger eines Sattelkraftfahrzeugs oder ein Kupplungsbolzen für ein Zugfahrzeug eines Lastzugs sein kann, wenigstens ein Verschleißelement des Verschleißdetektionsmittels derart angeordnet, sodass sowohl das Material der Kupplungsvorrichtung als auch das Material des Verschleißelements durch den Abrieb bzw. durch den Verschleiß, welcher im Betrieb wie eingangs beschrieben seitens der Kupplungsvorrichtung auftritt, in ihrer radialen Erstreckung reduziert werden. Zum anderen kann das wenigstens eine Verschleißelement des Verschleißdetektionsmittels derart ausgebildet und an der Kontur bzw. an dem Material der Kupplungsvorrichtung angeordnet sein, so dass ein Verschleiß der Kupplungsvorrichtung senkrecht zur Längsachse ausschließlich das Verschleißelement verschleißt, da ausschließlich das Verschleißelement mit dem Gegenstück der Kupplung mit dem anderen Fahrzeug in Kontakt stehen kann, d.h. die Kupplungsvorrichtung das Gegenstück der Kupplung mit dem anderen Fahrzeug sonst senkrecht zur Längsachse nicht berührt bzw. zumindest nicht derart berührt, dass dieser Kontakt zu einem Verschleiß führen kann.

Hierzu kann das wenigstens eine Verschleißelement genau radial bzw. senkrecht zur Längsachse oder zumindest derart schräg zur Längsachse in und bzw. oder an der Kupplungsvorrichtung angeordnet sein, sodass der Abrieb bzw. der Verschleiß auch oder nur das Verschleißelement von außen reduzieren kann.

Der vorliegenden Erfindung liegt dabei die Erkenntnis zugrunde, dass durch die Ausbildung eines Teils der Kupplungsvorrichtung als bzw. mit einem Verschleißelement das Maß des Abriebs bzw. des Verschleißes der Kupplungsvorrichtung an dieser Stelle von außen optisch erkennbar und bzw. oder sensorisch erfassbar gemacht werden kann. In jedem Fall kann der Zustand des Verschleißelements auf diese Art und Weise einfacher erkannt bzw. überwacht werden als dies bisher durch regelmäßige manuelle Kontrollen von Kupplungsvorrichtungen wie insbesondere Zugsattelzapfen und Kupplungsbolzen selbst wie eingangs beschrieben möglich ist. Dies kann den Aufwand und damit auch die Kosten der Kontrolle des Maßes des Verschleißes der Kupplungsvorrichtung reduzieren. Dies kann auch die Verlässlichkeit des Ergebnisses der Kontrolle erhöhen, was zum einen die Verkehrssicherheit des Gespanns erhöhen und zum anderen einen vorzeitigen bzw. unnötigen Austausch einer noch verwendbaren Kupplungsvorrichtung vermeiden kann. Dabei das Verschleißelement innerhalb der Kupplungsvorrichtung anzuordnen, kann den Aufwand der Umsetzung und insbesondere den hierfür erforderlichen Bauraum geringhalten. Insbesondere kann eine durchgängige bzw. deutlich regelmäßigere Kontrolle bzw. Überwachung des Maßes des Verschleißes der Kupplungsvorrichtung als bisher bekannt erfolgen, was die Verkehrssicherheit des Gespanns sowie die Dauer der Verwendung einer Kupplungsvorrichtung erhöhen kann.

Dabei kann der Verschleiß bzw. das Erreichen einer vorbestimmten radialen Verschleißgrenze des Verschleißelements und damit auch der Kupplungsvorrichtung in dieser Stelle der Kupplungsvorrichtung erfindungsgemäß zumindest abschnittsweise und vorzugsweise vollständig in der Umfangsrichtung um die Kupplungsvorrichtung herum erkannt werden, indem das Verschleißelement einen Hohlraum, welcher ein unter Überdruck stehendes Fluid wie insbesondere Luft bei beispielsweise 6 Bar bis 8 Bar aufweist, fluiddicht verschließt, solange der Verschleiß der Kupplungsvorrichtung und damit auch der Verschleiß des Verschleißelements in dieser Stelle der Kupplungsvorrichtung ein zulässiges Maß aufweist, da dann die Wandstärke des Verschleißelements ausreichend bleibt, um das unter Überdruck stehende Fluid fluiddicht einzuschließen und somit dessen Überdruck zu halten. Wird jedoch die Verschleißgrenze erreicht, wird hierdurch das Verschleißelement durchbrochen und das Fluid kann aufgrund seines Überdrucks nach außen, d.h. nach außerhalb des Hohlraums, entweichen. Der Überdruck des im Hohlraum eingeschlossen Fluids geht somit in dem Moment bzw. zu dem Zeitpunkt verloren, wenn die Verschleißgrenze der Kupplungsvorrichtung erreicht wird. Wenigstens zwischen diesen beiden Zuständen kann mittels des sensorisch erfassten Drucks des Fluids im Hohlraum unterschieden werden.

Durch die zumindest abschnittsweise in der Umfangrichtung ausgebildete Kombination von Hohlraum und Verschleißelement kann der Verschleiß der Kupplungsvorrichtung in diesem Maße bzw. entlang dieser Erstreckung in der Umfangsrichtung vollständig und lückenlos bzw. stufenlos erkannt werden, da sich das erfindungsgemäße Verschleißelement entsprechend weit durchgängig in der Umfangsrichtung erstreckt. Somit kann ein unzulässig hoher Verschleiß das Verschleißelement an jeder Stelle entlang der Umfangsrichtung durchbrechen und den Druckverlust des Fluids hervorrufen, welcher dann erkannt werden kann, was zu einer in der Umfangsrichtung vollständigen und lückenlosen bzw. stufenlosen Verschleißdetektion der Kupplungsvorrichtung führen kann. Durch die Verwendung mehrerer Kombinationen von Hohlraum und Verschleißelement entlang der Längsachse zueinander versetzt kann dies entlang der Längsachse an mehreren Stellen bzw. in mehreren Bereichen der Kupplungsvorrichtung erfolgen.

In jedem Fall kann dies lückenlos bzw. stufenlos vollständig in der Umfangsrichtung erfolgen, indem die Kombination von Hohlraum und Verschleißelement in der Umfangsrichtung ringförmig geschlossen vorgesehen wird. In diesem Fall kann das Verschleißelement als Buchse vorgesehen werden, welche über die Kupplungsvorrichtung an die gewünschte Position geschoben werden kann. Hierzu kann ggfs. die Kupplungsvorrichtung als Zugsattelzapfen zweigeteilt ausgebildet sein, um die Buchse im getrennten Zustand überhaupt positionieren zu können. Die Verbindung der beiden Zugsattelzapfenteile kann mittels einer Gewindeverbindung bzw. einer Schraubverbindung erfolgen.

In jedem Fall können diese beiden Zustände - der Überdruck im Hohlraum ist vorhanden oder eben nicht - von dem Drucksensor erfasst bzw. unterschieden werden. Hierzu kann der Drucksensor fortwährend Druckmesswerte als Information des Drucks des Fluids im Hohlraum erfassen, welche dann seitens des Drucksensors selbst und bzw. oder außerhalb des Drucksensors, beispielsweise von einem separaten elektronischen Element wie beispielsweise von einer Steuerungseinheit der Kupplungsvorrichtung oder von einer Steuerungseinheit oder dergleichen außerhalb der Kupplungsvorrichtung, entsprechend wenigstens dahingehend ausgewertet werden können, ob der Überdruck des Fluids weiterhin vorliegt und somit das Verschleißelement die Dichtigkeit des Hohlraums gewährleistet, wodurch auf ein zulässiges Maß des Verschleißes des Verschleißelements und damit auch der Kupplungsvorrichtung an dieser Stelle der Kupplungsvorrichtung geschlossen werden kann.

Im anderen Fall kann anhand des sensorisch erfassten Druckwertes als Information des Drucks des Fluids im Hohlraum, falls der Druck unterhalb eines vorbestimmten Grenzwertes liegt bzw. dem Umgebungsdruck entspricht, auf eine Undichtigkeit des Verschleißelements geschlossen werden, welche auf einen unzulässig hohen Verschleiß der Kupplungsvorrichtung an dieser Stelle zurückgeführt werden kann, welcher das Verschleißelement durchbrochen und somit den Hohlraum mit der Umgebung fluidführend verbunden hat.

Dies kann ebenso mittels eines Druckschalters als einfacher Drucksensor erreicht werden, welcher dann von einem Zustand in den anderen Zustand umschalten kann, wenn der Druck des Fluids aufgrund einer Undichtigkeit des Verschleißelements abfällt.

In jedem Fall kann somit ein sensorisch erfasster Wert, vorzugsweise seitens des Drucksensors, in einen Druckwert umgerechnet bzw. ein Wert, welche den Zustand des Druckschalters als Drucksensor repräsentiert, vom Drucksensor nach außerhalb der Kupplungsvorrichtung ausgesendet bzw. übertragen werden, was vorzugsweise drahtlos erfolgen kann, um den Aufwand einer Verkabelung zu vermeiden. Alternativ oder zusätzlich kann auch eine Auswertung des erfassten Druckwertes des Drucksensors seitens des Drucksensors selbst dahingehend erfolgen, ob der besagte Druckgrenzwert eingehalten, wonach der aktuelle Verschleiß als zulässig anzusehen wäre, oder unterschritten wird, wonach der aktuelle Verschleiß als unzulässig anzusehen wäre, vgl. den beiden Zuständen des Drucksensors als Druckschalter. Dann könnte dieses Ergebnis der Auswertung nach außerhalb kommuniziert werden, um den Aufwand der entsprechenden Auswertung bereits seitens des Drucksensors bzw. der Kupplungsvorrichtung , beispielsweise seitens einer separaten Steuerungseinheit der Kupplungsvorrichtung, welche mit dem Drucksensor verbunden ist, vorzunehmen und somit außerhalb der Kupplungsvorrichtung zu vermeiden.

Letzteres kann es begünstigen, das Ergebnis der erfindungsgemäßen Verschleißüberwachung einer Steuerungseinheit außerhalb der Kupplungsvorrichtung wie beispielsweise einer Motorsteuerungseinheit eines Fahrzeugs eines Gespanns wie insbesondere eines Sattelaufliegers und bzw. oder einer Sattelzugmaschine zur Verfügung zu stellen, welche von einem anderen Hersteller als die Kupplungsvorrichtung stammt, so dass die Information des Ergebnisses der erfindungsgemäßen Verschleißüberwachung über eine Schnittstelle übergeben werde kann, ohne den Drucksensor bzw. die Steuerungseinheit der Kupplungsvorrichtung und die hiervon unabhängige Steuerungseinheit eines Fahrzeugs des Gespanns wie beispielsweise des Sattelaufliegers und bzw. oder einer Sattelzugmaschine darüber hinaus aufeinander abstimmen zu müssen. Auch können Informationen wie der Druckgrenzwert so Bestandteil des Drucksensors bzw. der Steuerungseinheit der Kupplungsvorrichtung sein und müssen der hiervon unabhängigen Steuerungseinheit beispielsweise des Sattelaufliegers und bzw. oder einer Sattelzugmaschine nicht zur Verfügung gestellt werden, was zumindest bei der Montage und Inbetriebnahme der erfindungsgemäßen Kupplungsvorrichtung sonst dort einen Eingriff und Aufwand erfordern würde, was auf diese Art und Weise vermieden werden kann.

In jedem Fall kann die Ausgabe, das Aussenden bzw. die Kommunikation einer entsprechenden Information des Drucks des Fluids im Hohlraum mittels einer, vorzugsweise drahtlosen, Kommunikationseinheit bzw. mittels einer, vorzugsweise drahtlosen, Sendeinheit erfolgen, welche wenigstens Daten bzw. Informationen nach außerhalb der Kupplungsvorrichtung, vorzugsweise drahtlos, aussenden und vorzugsweise als, vorzugsweise drahtlose, Sende-/Empfangseinheit ferner Daten und Informationen von außerhalb empfangen kann.

Dies kann seitens des Drucksensors bzw. seitens einer Steuerungseinheit der Kupplungsvorrichtung mittels der, vorzugsweise drahtlosen, Sendeinheit bzw. der Sende-/Empfangseinheit selbsttätig unmittelbar dann erfolgen, wenn der Druckgrenzwert bzw. die Verschleißgrenze erreicht ist bzw. der Druckschalter betätigt wird, sodass von der Person bzw. vom Kraftfahrer hierauf sofort reagiert werden kann. Hierdurch kann das Ausgeben bzw. das Aussenden dieser Information auf den Fall beschränkt werden, wenn ein unzulässiger Verschleiß vorliegt. Ansonsten kann eine Kommunikation vermieden werden, was Energiesparen und Störungen der Person bzw. des Kraftfahrers vermeiden kann. Jedoch kann die Person bzw. der Kraftfahrer dann nicht unterscheiden, ob eine Information eines unzulässigen Verschleißes ausbleibt, weil der erfindungsgemäß überwachte Verschleiß zulässig bzw. sich innerhalb der zulässigen Grenzen befindet, oder ob der Drucksensor, eine Steuerungseinheit der Kupplungsvorrichtung und bzw. oder die Sendeinheit bzw. Sende-/Empfangseinheit nicht funktioniert, beispielsweise aufgrund von Beschädigung oder einem entleerten elektrischen Energiespeicher.

Diese Information kann von dem Drucksensor bzw. seitens einer Steuerungseinheit der Kupplungsvorrichtung daher alternativ fortlaufend bzw. sich regelmäßig wiederholend mittels der, vorzugsweise drahtlosen, Sendeinheit bzw. der Sende-/Empfangseinheit ausgegeben werden, um sicherzustellen, dass diese Information die Person bzw. den Kraftfahrer erreicht. Durch diese fortlaufenden eingehenden Informationen, beispielsweise im Takt eines vorbestimmten Zeitabstands von beispielsweise einer Stunde, kann die Person bzw. der Kraftfahrer auch erkennen, dass der Drucksensor bzw. die Steuerungseinheit der Kupplungsvorrichtung funktionsfähig ist. Die Ausgabe diese Information seitens des Drucksensors bzw. seitens einer Steuerungseinheit der Kupplungsvorrichtung mittels der, vorzugsweise drahtlosen, Sendeinheit bzw. der Sende-/Empfangseinheit kann gegebenenfalls durch eine Eingangsbestätigung seitens der Person bzw. des Kraftfahrers zumindest für die Dauer der aktuellen Benutzung bzw. der aktuellen Fahrt beendet bzw. pausiert werden, um elektrische Energie seitens des Drucksensors bzw. seitens einer Steuerungseinheit der Kupplungsvorrichtung sowie der Sendeinheit bzw. Sende-/Empfangseinheit zu sparen.

Die Ausgabe diese Information seitens des Drucksensors bzw. seitens einer Steuerungseinheit der Kupplungsvorrichtung mittels der, vorzugsweise drahtlosen, Sendeinheit bzw. der Sende-/Empfangseinheit kann gegebenenfalls zusätzlich oder alternativ erst bei einer Abfrage bzw. in Reaktion auf eine Aufforderung von außerhalb erfolgen, wie weiter unten noch näher beschrieben werden wird. Dies kann beispielsweise einmalig bei Aufnahme einer Benutzung bzw. bei Antritt einer Fahrt erfolgen.

In jedem Fall kann die Ausgabe dieser Information seitens des Drucksensors bzw. seitens einer Steuerungseinheit der Kupplungsvorrichtung mittels der, vorzugsweise drahtlosen, Sendeinheit bzw. der Sende-/Empfangseinheit derart an die Person bzw. an den Kraftfahrer erfolgen, so dass diese Information drahtlos an ein elektronisches Empfangsgerät wie zum Beispiel an ein mobiles Endgerät zum Beispiel in Form eines Smartphones, eines Tablets oder dergleichen der Person bzw. des Kraftfahrers ausgesendet wird. Zusätzlich oder alternativ kann diese Information seitens des Drucksensors bzw. seitens einer Steuerungseinheit der Kupplungsvorrichtung mittels der, vorzugsweise drahtlosen, Sendeinheit bzw. der Sende-/Empfangseinheit auch drahtlos an ein elektronisches Empfangsgerät beispielsweise der Sattelzugmaschine ausgesendet, dort empfangen sowie weiterverarbeitet und dem Kraftfahrer über ein Ausgabeelement wie insbesondere ein Anzeigeelement der Sattelzugmaschine ausgegeben bzw. angezeigt werden. Diese Information kann in diesem Fall gegebenenfalls von der Sattelzugmaschine bzw. dessen Steuerungseinheit drahtlos an ein Flottenmanagementsystem weitergeleitet werden, um dort den Austausch des verschlissenen Zugsattelzapfens als Kupplungsvorrichtung berücksichtigen und planen zu können.

Zusätzlich oder alternativ kann der unzulässig hohe Verschleiß der Kupplungsvorrichtung auch optisch von einer Person dadurch erkannt werden, dass der Hohlraum vom Verschleißelement nicht mehr verdeckt und somit sichtbar wird. Dies kann es ermöglichen, den Verschleiß rein optisch durch eine Person zu beurteilen. Dies kann erfolgen, falls gerade keine Möglichkeit zur elektronischen Auswertung der Information des Drucksensors zur Verfügung steht, beispielsweise bei von der Sattelzugmaschine getrenntem Sattelauflieger bzw. vom Sattelauflieger demontiertem Zugsattelzapfen. Auch kann dies einer Person eine regelmäßige optische Kontrolle des Verschleißes einer optisch sichtbaren Kupplungsvorrichtung, beispielsweise bei einem abgestellten bzw. abgesattelten Sattelauflieger, erlauben. Beispielsweise kann der Kraftfahrer der Sattelzugmaschine, welcher einen fremden bzw. unbekannten Sattelauflieger mit einem erfindungsgemäßen Zugsattelzapfen als Kupplungsvorrichtung ankoppeln soll, einfach und schnell selbst den Verschleißzustand des Zugsattelzapfens des Sattelaufliegers optisch kontrollieren, insbesondere bevor eine, vorzugsweise drahtlose, Datenverbindung zwischen einer Steuerungseinheit beispielsweise der Sattelzugmaschine und einer Steuerungseinheit des Sattelaufliegers bzw. einer Steuerungseinheit des Zugsattelzapfens bzw. dessen Drucksensors direkt hergestellt ist, um die Information des Drucks des Fluids im Hohlraum bzw. des Verschleißzustands des Verschleißelements des Zugsattelzapfen elektronisch abfragen und auswerten bzw. anzeigen zu können. Dies kann das Vertrauen des Kraftfahrers in die Beförderung des fremden bzw. unbekannten Sattelaufliegers erhöhen. Auch kann dies eine Möglichkeit zur zusätzlichen optischen Kontrolle durch eine Person bieten, um einen fehlerhaften Drucksensor, welcher einen zulässigen oder unzulässigen Verschleiß zu Unrecht erkannt haben kann, zu überprüfen.

In jedem Fall kann das Verschleißelement in der horizontalen Ebene bzw. im Querschnitt der Kupplungsvorrichtung betrachtet an einer Stelle angeordnet sein, an welcher üblicherweise ein besonders signifikanter Abrieb bzw. Verschleiß auftritt bzw. an welcher üblicherweise zuerst das Erreichen eines unzulässig hohen Verschleißes zu erwarten ist. Dies kann die Aussagefähigkeit des Verschleißelements entsprechend erhöhen.

Es können auch, entlang der Längsachse der Kupplungsvorrichtung betrachtet, mehrere Verschleißelemente mit einem gemeinsamen Drucksensor oder mit jeweils einem eigenen Drucksensor verwendet werden, wie bereits erwähnt, um die zuvor beschriebene Kontrolle des Verschleißes an entsprechend vielen Stellen bzw. in verschiedenen Ebenen der Kupplungsvorrichtung entlang der Längsachse umsetzen zu können. Hierdurch können insbesondere mehrere Stellen, welche üblicherweise einem signifikanten Verschleiß unterliegen, gleichzeitig wie zuvor beschrieben auf Verschleiß überwacht werden.

In jedem Fall kann eine elektrische Speisung bzw. eine elektrische Versorgung wenigstens des Drucksensors und vorzugsweise weiterer elektrischer und bzw. elektronischer Elemente der Kupplungsvorrichtung wie beispielsweise eine Sende- bzw. eine Sende-/Empfangseinheit und bzw. oder eines Leuchtmittels mittels eines elektrischen Energiespeichers erfolgen, welcher in und bzw. oder an der Kupplungsvorrichtung, vorzugsweise innenliegend nahe dem Drucksensor oder mit dem Drucksensor oder einem anderen elektrischen bzw. elektronischen Element integriert, vorgesehen sein kann. Hierdurch kann eine elektrische Energieversorgung des Drucksensors und gegebenenfalls mehrerer bzw. aller elektrischer und bzw. elektronischer Elemente der Kupplungsvorrichtung direkt seitens der Kupplungsvorrichtung selbst erfolgen, sodass auf eine elektrisch leitfähige Verbindung von außerhalb der Kupplungsvorrichtung verzichtet werden kann. Dies kann den Aufwand der Verwendung wenigstens eines Drucksensors wie zuvor beschrieben entsprechend geringhalten.

Gemäß einem Aspekt der Erfindung erstreckt sich das Verschleißelement senkrecht zur Längsachse derart weit, wie es einer Verschleißgrenze der Kupplungsvorrichtung an dieser Stelle der Kupplungsvorrichtung entspricht, wobei der Hohlraum senkrecht zur Längsachse hinter dem Verschleißelement angeordnet ist.

Mit anderen Worten deckt das Verschleißelement den Hohlraum bzw. einen Umfangskanal des Hohlraums direkt radial ab, sodass der Hohlraum bzw. der Umfangskanal rein radial in die Kupplungsvorrichtung, beispielsweise durch Bohren bzw. Fräsen, eingebracht werden kann, was die Umsetzung vereinfachen kann.

Gemäß einem weiteren Aspekt der Erfindung weist der Hohlraum auf:
- wenigstens einen ersten Hohlraum als Umfangskanal, welcher sich zumindest abschnittsweise, vorzugsweise vollständig, in der Umfangsrichtung um die Kupplungsvorrichtung herum erstreckt, und
- wenigstens einen zweiten Hohlraum als Radialkanal, welcher sich senkrecht zur Längsachse geradlinig vom ersten Hohlraum weg in die Kupplungsvorrichtung hinein erstreckt,
wobei der Drucksensor ausgebildet ist, den Druck des Fluids in den zweiten Hohlraum gerichtet zu erfassen.

Dies kann eine konkrete Möglichkeit der Umsetzung dahingehend darstellen, dass die Kombination von Hohlraum und Verschleißelement in der Umfangrichtung durch den Umfangskanal als ersten Hohlraum des gesamten Hohlraums und dessen Abdeckung durch das entsprechend geformte bzw. sich erstreckende Verschleißelement erfolgt. Gleichzeitig kann der Drucksensor in das Innere der Kupplungsvorrichtung verlagert werden, indem der Umfangskanal wenigstens an einer Stelle mittels des zweiten Hohlraum des gesamten Hohlraums als Radialkanal mit dem Drucksensor fluidführend verbunden wird.

Gemäß einem weiteren Aspekt der Erfindung weist der Hohlraum ferner auf:
- wenigstens einen Vertikalhohlraum, welcher sich entlang der Längsachse in der Kupplungsvorrichtung, vorzugsweise in einem Einschnürungsabschnitt des Zugsattelzapfens, erstreckt,
wobei der Drucksensor ausgebildet ist, den Druck des Fluids in den Vertikalhohlraum gerichtet zu erfassen.

Auf diese Art und Weise kann der Drucksensor zentral in der Kupplungsvorrichtung, insbesondere entlang eines Hohlraums auf der Längsachse im Inneren des Zugsattelzapfens, angeordnet werden, um eine Schwächung der Stabilität der Kupplungsvorrichtung durch den Hohlraum zur Aufnahme des Drucksensors zu minimieren, indem der Hohlraum zur Aufnahme des Drucksensors symmetrisch auf der Längsachse angeordnet wird.

Gemäß einem weiteren Aspekt der Erfindung ist die Kupplungsvorrichtung ein Zugsattelzapfen, wobei der Zugsattelzapfen entlang seiner Längsachse in diese Reihenfolge aufweist:
- einen Montageteller, welcher ausgebildet ist, mit dem Sattelauflieger verbunden zu werden,
- einen Übergangsabschnitt, welcher sich dem Montageteller anschließt,
- einen Einschnürungsabschnitt, welcher sich dem Übergangsabschnitt anschließt und welcher zur formschlüssigen Verbindung mit einer Sattelkupplung einer Sattelzugmaschine des Sattelkraftfahrzeugs ausgebildet ist, und
- einen Abschlussbund, welcher sich dem Einschnürungsabschnitt anschließt und welcher den Zugsattelzapfen nach unten hin abschließt,
wobei das Verschleißelement im Übergangsabschnitt und bzw. oder im Einschnürungsabschnitt angeordnet ist.

Entsprechend kann eine Überwachung auf Verschleiß wie zuvor beschrieben an den entsprechenden Stellen dieser Abschnitte des Zugsattelzapfens erfolgen.

Gemäß einem weiteren Aspekt der Erfindung ist das Verschleißelement in der Umfangsrichtung um den Zugsattelzapfen herum vollständig geschlossen ausgebildet, wobei der Zugsattelzapfen wenigstens, vorzugsweise genau, zweigeteilt mit einem ersten, oberen Zugsattelzapfenteil und mit einem zweiten, unteren Zugsattelzapfenteil ausgebildet ist, wobei der zweite, untere Zugsattelzapfenteil wenigstens, vorzugsweise genau, den Abschlussbund aufweist, wobei der erste, obere Zugsattelzapfenteil und der zweite, untere Zugsattelzapfenteil mittels einer Verbindung, vorzugsweise mittels einer Gewindeverbindung, feststehend miteinander verbunden sind.

Dies kann eine Möglichkeit darstellen, eine Buchse oder dergleichen als in der Umfangsrichtung vollständig geschlossenes Verschleißelement zu verwenden, wie zuvor bereits erwähnt.

Gemäß einem weiteren Aspekt der Erfindung weist der Übergangsabschnitt ein erstes Verschleißelement, vorzugsweise mit einem ersten Hohlraum und mit einem zweiten Hohlraum, auf, wobei der Einschnürungsabschnitt ein zweites Verschleißelement, vorzugsweise mit einem ersten Hohlraum und mit einem zweiten Hohlraum, aufweist.

Dies kann die Umsetzung einer erfindungsgemäßen Verschleißdetektion abschnittsweise bis vollständig in der Umfangsrichtung um den Zugsattelzapfen herum an wenigstens zwei verschiedenen Stellen des Zugsattelzapfens entlang der Längsachse ermöglichen, wie zuvor bereits erwähnt.

Gemäß einem weiteren Aspekt der Erfindung ist die Kupplungsvorrichtung ein Kupplungsbolzen, wobei der Kupplungsbolzen einen Kupplungsabschnitt mit einem balligen Abschnitt aufweist, welcher ausgebildet ist, von einem Kupplungsauge einer Kupplungsöse aufgenommen zu werden, wobei der ballige Abschnitt des Kupplungsabschnitts zumindest abschnittsweise, vorzugsweise vollständig, vom Verschleißelement gebildet wird.

In diesem Fall kann die Umsetzung der erfindungsgemäßen Kupplungsvorrichtung als Kupplungsbolzen für ein Zugfahrzeug eines Lastzugs erfolgen, um die vorliegende Erfindung gemäß der konkreten technischen Merkmale eines Kupplungsbolzens umzusetzen bzw. den Kupplungsbolzen an die Erfindung anzupassen. So wird ein Kupplungsbolzen als Komponente einer Kupplungsaufnahme mit einem Kupplungsmaul eines Zugfahrzeugs verwendet. Das Kupplungsmaul der Kupplungsaufnahme des Zugfahrzeugs nimmt zum Kuppeln der Fahrzeugs eines Gespanns bzw. eines Fahrzeugverbundes eine Kupplungsöse eines Schafts eines Anhängers auf, welche auch als Zugöse bezeichnet werden kann. Die Kupplungsöse ist ringförmig an dem Ende des Schafts mit diesem einstückig, d. h. integral, ausgebildet, welches vom Anhänger weg zeigt. Die Kupplungsöse bildet mittig ein in der vertikalen Richtung verlaufendes Kupplungsauge aus, in welches der Kupplungsbolzen des Zugfahrzeugs in der vertikalen Richtung von oben eingeführt wird, um eine formschlüssige Verbindung der beiden Fahrzeuge herzustellen. Das Kupplungsauge kann auch als Kupplungsösenauge, als Zugösenauge oder als Zugösenbuchse bezeichnet werden. Der Schaft kann auch als Anhängerschaft oder als Zugschaft bezeichnet werden. Der Schaft kann auch als Deichsel oder als Anhängerdeichsel bezeichnet werden.

Derjenige Abschnitt des Kupplungsbolzens des Zugfahrzeugs, welcher im gekoppelten Zustand der beiden Fahrzeug von der Kupplungsöse des Anhängers umschlossen wird und sich mit der Kupplungsöse in derselben horizontalen Ebene befindet, kann als Kupplungsabschnitt bezeichnet werden, wobei sich der Kupplungsabschnitt des Kupplungsbolzens entlang der vertikalen Achse sowohl nach unten als auch nach oben etwas über diese gemeinsame horizontale Ebene hinaus erstrecken kann, um den Kontakt zwischen der Innenseite der Kupplungsöse und der Außenseite des Kupplungsbolzens mittels des Kupplungsabschnitts auch bei vertikalen Bewegungen bzw. Verschiebungen zwischen Kupplungsöse und Kupplungsbolzen sicherzustellen.

Bekannt ist es dabei, im Kupplungsabschnitt entlang der vertikalen Achse genau dort, wo die zuvor beschriebene gemeinsame horizontale Ebene von Kupplungsöse und Kupplungsbolzen verläuft, einen balligen Abschnitt vorzusehen, welcher sich als Verdickung bzw. als Vorsprung radial von der Längsachse des Kupplungsbolzens, welche bei Gebrauch mit der vertikalen Achse zusammenfällt, weg erstreckt. Der ballige Abschnitt kann in der Umfangsrichtung gleich und durchgängig ausgebildet sein. Ferner kann der ballige Abschnitt entlang der Längsachse nach oben und bzw. oder nach unten schräg verlaufen, um in den zylindrischen Querschnitt des Kupplungsbolzens bzw. dessen Kupplungsabschnitt überzugehen.

Da genau der ballige Abschnitt des Kupplungsabschnitts zumindest abschnittsweise mit der Kupplungsöse in Kontakt kommt und verschleißt, kann bei der Umsetzung der erfindungsgemäßen Kupplungsvorrichtung als Kupplungsbolzen das Verschleißelement genau dort vorgesehen werden, um erfindungsgemäß den Verschleiß detektieren bzw. erkennen zu können, wie zuvor beschrieben. Dabei kann das Verschleißelement abschnittsweise im bzw. am balligen Abschnitt des Kupplungsabschnitts ausgebildet bzw. vorgesehen werden. Alternativ kann der ballige Abschnitt des Kupplungsabschnitts auch vollständig bzw. ausschließlich vom Verschleißelement gebildet werden, was die Umsetzung vereinfachen kann.

In jedem Fall kann das Verschleißelement als Verschleißbuchse ausgebildet und von außen auf bzw. in den balligen Abschnitt des Kupplungsabschnitts aufgepresst sein, insbesondere in einen dort nutförmig vorgesehenen ersten Hohlraum bzw. Umfangskanal des Kupplungsabschnitts. Wird der ballige Abschnitt des Kupplungsabschnitts vollständig bzw. ausschließlich vom Verschleißelement gebildet, so kann der ballige Abschnitt des Kupplungsabschnitts auch vollständig als Verschleißbuchse ausgebildet sein.

Gemäß einem weiteren Aspekt der Erfindung weist die Kupplungsvorrichtung ferner eine, vorzugsweise drahtlose, Sendeeinheit auf, welche wenigstens signalübertragend mit dem Drucksensor verbunden ist, um wenigstens eine Information hinsichtlich des Drucks des Fluids im Hohlraum zu erhalten, wobei die, vorzugsweise drahtlose, Sendeeinheit ferner ausgebildet ist, die erhaltene Information des Drucks nach außerhalb der Kupplungsvorrichtung, vorzugsweise drahtlos, auszusenden.

Dies kann eine konkrete Möglichkeit der Umsetzung darstellen, um die Information des Drucks nach außerhalb des Drucksensors bzw. der Kupplungsvorrichtung zu kommunizieren, wie zuvor bereits erwähnt. Die Information des Drucks kann ein Druckwert, ein Druckschalterzustand und bzw. oder eine hieraus resultierende Information darstellen, wie ebenfalls zuvor bereits erwähnt.

Gemäß einem weiteren Aspekt der Erfindung weist die ausgesendete Information des Drucks der Sendeeinheit den Druck des Fluids im Hohlraum und bzw. oder eine aus dem Druck des Fluids im Hohlraum abgeleitete Information auf, wie zuvor bereits erwähnt.

Gemäß einem weiteren Aspekt der Erfindung weist die Kupplungsvorrichtung mehrere Verschleißelemente mit jeweils wenigstens einem Hohlraum und mit jeweils wenigstens einem Drucksensor auf.

Somit kann der Verschleiß an mehreren Stellen der Kupplungsvorrichtung entlang der Längsachse jeweils unabhängig voneinander mit jeweils einem eigenen Drucksensor wie zuvor beschrieben überwacht werden. Dies kann den Aufwand aufgrund der mehreren Drucksensoren erhöhen, da die Drucksensoren jeweils Bauraum erfordern, Kosten für die Anschaffung und Montage verursachen sowie elektrisch gespeist werden müssen. Dies kann jedoch eine Möglichkeit darstellen, mehrere Stellen der Kupplungsvorrichtung entlang der Längsachse erfindungsgemäß unabhängig voneinander auf Verschleiß zu überwachen.

In diesem Fall kann die von der, vorzugsweise drahtlosen, Sendeeinheit ausgesendete Information des Drucks eine Identifikation des jeweiligen Drucksensors enthält. So können die Daten der Drucksensoren voneinander unterschieden und dem jeweiligen Drucksensor und damit auch derjenigen Stelle der Kupplungsvorrichtung, welcher von diesem Drucksensor auf Verschleiß überwacht wird, zugeordnet werden.

Gemäß einem weiteren Aspekt der Erfindung ist die, vorzugsweise drahtlose, Sendeeinheit eine, vorzugsweise drahtlose, Sende-/Empfangseinheit, wobei die, vorzugsweise drahtlose, Sende-/Empfangseinheit ausgebildet ist, vorzugsweise drahtlos, zum Aussenden der Information des Drucks von außerhalb der Kupplungsvorrichtung aufgefordert zu werden.

Dies kann eine Umsetzung wie zuvor bereits beschrieben ermöglichen.

Gemäß einem weiteren Aspekt der Erfindung weist die Kupplungsvorrichtung ferner ein Leuchtmittel auf, welches wenigstens signalübertragend mit dem Drucksensor verbunden ist, wobei das Leuchtmittel ausgebildet ist, in Abhängigkeit des Druck des Fluids im Hohlraum betrieben zu werden.

Auf diese Art und Weise kann das Ergebnis der sensorischen Druck- bzw. Verschleißüberwachung zusätzlich oder alternativ zum Aussenden nach außerhalb der Kupplungsvorrichtung auch direkt an der Kupplungsvorrichtung optisch mittels eines Leuchtmittel angezeigt werden, um dort direkt von einer Person erkannt zu werden. Dies kann insbesondere dann nützlich sein, wenn beispielsweise der Sattelauflieger abgestellt bzw. abgesattelt ist und somit eine Information des Drucks des Hohlraums beispielsweise nicht mittels einer Steuerungseinheit einer Sattelzugmaschine abgefragt werden kann.

Das Leuchtmittel kann insbesondere als LED umgesetzt werden. In jedem Fall kann die Kupplungsvorrichtung bzw. vorzugsweise ein Abschlussbund der Kupplungsvorrichtung, insbesondere entlang der Längsachse am unteren Ende und bzw. oder radial bzw. senkrecht zur Längsachse ausgerichtet, das Leuchtmittel bzw. in der Umfangsrichtung eine Mehrzahl von, vorzugsweise gleichmäßig verteilten, Leuchtmitteln aufweisen. Die elektrische Speisung kann vorzugsweise gemeinsam mit dem Drucksensor und ggfs. mit einer Sendeeinheit bzw. einer Sende-/Empfangseinheit erfolgen.

In jedem Fall kann der Betrieb des Leuchtmittels insbesondere dauerhaft bzw. durchgängig erfolgen, um jederzeit den Verschleißzustand der Kupplungsvorrichtung kontrollieren zu können. Hierzu können die beiden resultierenden relevanten Zustände, ob der Verschleiß der Kupplungsvorrichtung an wenigstens einer Stelle entlang der Längsachse zulässig oder unzulässig ist, durch zwei signifikant unterschiedliche Farben des Leuchtmittels unterschieden werden, beispielsweise durch "grün" für einen zulässigen Verschleiß und "rot" für einen unzulässigen Verschleiß. Alternativ können die beiden resultierenden relevanten Zustände auch dadurch unterschieden werden, indem ein langsames Blinken bei einem zulässigen Verschleiß und ein schnelles Blinken bei einem unzulässigen Verschleiß erfolgt. Dies kann auch mit der farblichen Information wie zuvor beschrieben kombiniert werden.

Durch einen dauerhaften Betrieb des Leuchtmittels kann die Person bzw. der Kraftfahrer auch erkennen, dass die erfindungsgemäße Verschleißdetektion funktionsfähig ist. Ferner kann ein entsprechender Aufwand, das Leuchtmittel einzuschalten und auszuschalten bzw. hierfür entsprechende elektrische Möglichkeiten wie zum Beispiel einen von außen zugänglichen Schalter an der Kupplungsvorrichtung vorsehen zu müssen, vermieden werden.

Ggfs. könnte ein funktionsfähiges Leuchtmittel, ggfs. und eine funktionsfähige Steuerungseinheit der Kupplungsvorrichtung, bei einem gleichzeitig funktionsunfähigen Drucksensor zu einer Ausgabe führen, wie sie dem unzulässigen Verschleiß entspricht, um die Aufmerksamkeit der Person bzw. des Fahrers zu wecken.

Alternativ könnte das Leuchtmittel, insbesondere in "rot" und bzw. oder blinkend zur Warnung, auch lediglich dann betrieben werden, wenn ein unzulässiger Verschleiß erkannt wird, um elektrische Energie zu sparen und die Umgebung bzw. Personen nicht durch ein durchgängiges bzw. periodisches Leuchten bzw. Blinken zu irritieren, solange der Verschleiß ein zulässiges Maß aufweist. In diesem Fall könnte jedoch nicht unterschieden werden, ob kein Leuchten bzw. Blinken erfolgt, weil der Verschleiß als zulässig erkannt wurde, oder ob ein Funktionsausfall der erfindungsgemäßen Verschleißdetektion vorliegt.

Gemäß einem weiteren Aspekt der Erfindung ist der Drucksensor ein Druckschalter, welcher ausgebildet ist, in Reaktion auf einen vorbestimmten Druckabfall des Fluids im Hohlraum zu schalten.

Dies kann zur Umsetzung der Erfindung vollkommen ausreichend sein und gleichzeitig den Aufwand zur Umsetzung des Drucksensors geringhalten.

Die Erfindung betrifft auch ein Fahrzeug, vorzugsweise einen Sattelauflieger oder ein Zugfahrzeug, mit einer Kupplungsvorrichtung, vorzugsweise einem Zugsattelzapfen oder einem Kupplungsbolzen, wie zuvor beschrieben. Hierdurch können die zuvor beschriebenen Aspekte einer erfindungsgemäßen Kupplungsvorrichtung bei einem Fahrzeug eines Fahrzeugverbundes bzw. eines Gespanns umgesetzt und dort genutzt werden.

Mehrere Ausführungsbeispiele und weitere Vorteile der Erfindung werden nachstehend im Zusammenhang mit den folgenden Figuren rein schematisch dargestellt und näher erläutert. Darin zeigt:
- Figur 1: eine schematische Seitenansicht eines Fahrzeugverbundes mit einer erfindungsgemäßen Kupplungsvorrichtung gemäß eines ersten bis dritten Ausführungsbeispiels;
- Figur 2: eine schematische Seitenansicht eines Fahrzeugverbundes mit einer erfindungsgemäßen Kupplungsvorrichtung gemäß eines vierten Ausführungsbeispiels;
- Figur 3: eine perspektivische Darstellung der erfindungsgemäßen Kupplungsvorrichtung gemäß des ersten Ausführungsbeispiels in Form eines Zugsattelzapfens ohne Verschleißelemente;
- Figur 4: die Darstellung der Figur 3 mit Verschleißelementen;
- Figur 5: einen Längsschnitt der Darstellung der Figur 4;
- Figur 6: einen Längsschnitt eines erfindungsgemäßen Zugsattelzapfens gemäß des zweiten Ausführungsbeispiels;
- Figur 7: einen Längsschnitt eines erfindungsgemäßen Zugsattelzapfens gemäß des dritten Ausführungsbeispiels;
- Figur 8: eine perspektivische Darstellung der erfindungsgemäßen Kupplungsvorrichtung gemäß des vierten Ausführungsbeispiels in Form eines Kupplungsbolzens mit Verschleißelement; und
- Figur 9: einen Längsschnitt der Darstellung der Figur 8.

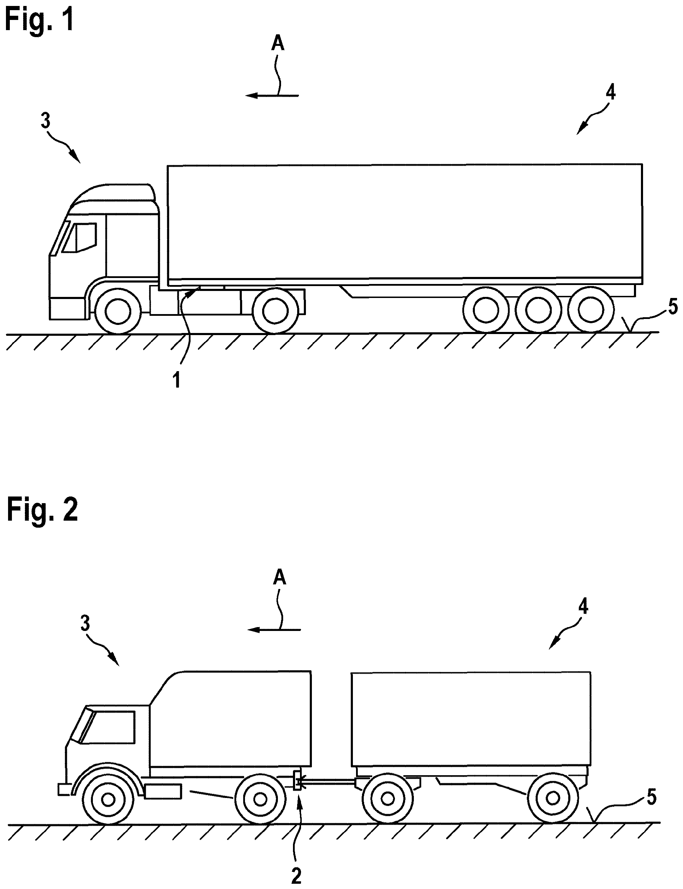

Die Figuren 1 und 2 werden in kartesischen Koordinaten betrachtet, ohne dass die entsprechenden Achsen dargestellt werden. Es ist eine Fahrtrichtung A dargestellt, welche auch als Bewegungsrichtung A oder als Zugrichtung A bezeichnet werden kann.

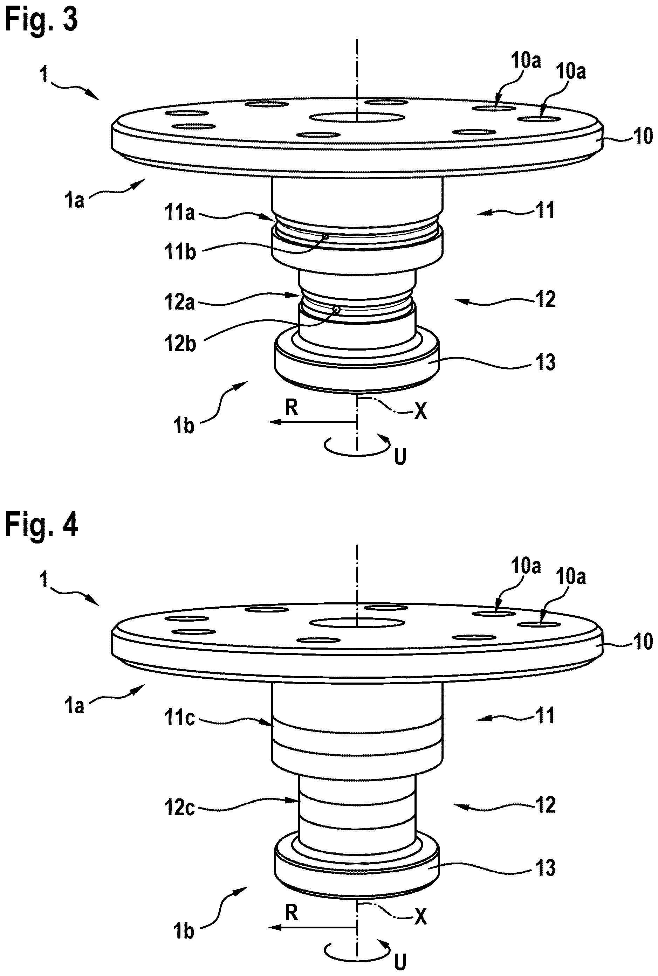

Die Figuren 3 bis 9 werden in zylindrischen Koordinaten betrachtet. Es erstreckt sich eine Längsachse X. Senkrecht zur Längsachse X erstreckt sich eine radiale Richtung R von der Längsachse X weg. Senkrecht zur radialen Richtung R und um die Längsachse X herum erstreckt sich eine Umfangsrichtung U. Die Längsachse X stellt gleichzeitig die vertikale Achse in kartesischen Koordinaten als die Achse der Schwerkraft bzw. der Gravitationskraft dar.

Figur 1 zeigt eine schematische Seitenansicht eines Fahrzeugverbundes 3, 4 mit einer erfindungsgemäßen Kupplungsvorrichtung 1 gemäß eines ersten bis dritten Ausführungsbeispiels.

Der Fahrzeugverbund 3, 4, welcher auch als Gespann 3, 4 bezeichnet werden kann, weist in diesem Fall ein in Zugrichtung A vorderes Fahrzeug 3 als Zugfahrzeug 3 in Form einer Sattelzugmaschine 3 und ein in Zugrichtung A hinteres Fahrzeug 4 in Form eines Sattelaufliegers 4 auf. Entsprechend kann der Fahrzeugverbund 3, 4 auch als Sattelzug 3, 4 oder als Sattelkraftfahrzeug 3, 4 bezeichnet werden. Der Fahrzeugverbund 3, 4 kann eine Fahrtbewegung in der Fahrtrichtung A, in der Bewegungsrichtung A bzw. in der Zugrichtung A auf einem Untergrund 5 ausführen.

Das Sattelzugmaschine 3 weist eine Sattelkupplung auf, welche einen Zugsattelzapfen 1 als Kupplungsvorrichtung 1 des Sattelaufliegers 4 aufnehmen und in der Horizontalen halten kann, so dass der Zugsattelzapfen 1 um die Längsachse X drehbeweglich gegenüber der Sattelkupplung ist. Die Sattelkupplung und der Zugsattelzapfen 1 verbinden die Sattelzugmaschine 3 kraftübertragend in der Längsrichtung X mit dem Sattelauflieger 4.

Figur 2 zeigt eine schematische Seitenansicht eines Fahrzeugverbundes 3. 4 mit einer erfindungsgemäßen Kupplungsvorrichtung 2 gemäß eines vierten Ausführungsbeispiels.

In diesem Fall weist der Fahrzeugverbund 3, 4 ein in Zugrichtung A vorderes Fahrzeug 3 als Zugfahrzeug 3 in Form eines Lastkraftwagens 3 und ein in Zugrichtung A hinteres Fahrzeug 4 in Form eines Anhängers 4 auf. Der Fahrzeugverbund 3, 4 kann somit als Lastzug 3, 4 bezeichnet werden.

An dem Lastkraftwagen 3 ist entgegen der Zugrichtung A an dessen Heck eine Kupplungsaufnahme mit einem Kupplungsmaul und einem Kupplungsbolzen 2 als Kupplungsvorrichtung 2 feststehend angeordnet, wobei die Kupplungsaufnahme bzw. dessen Kupplungsmaul entgegen der Zugrichtung A zum Anhänger 4 hin zeigt. In Zugrichtung A ist ferner an der Vorderseite des Anhängers 4 bzw. an einem Gestell des Anhängers 4 dem Lastkraftwagen 3 zugewandt ein Schaft bzw. eine Deichsel feststehend angeordnet. Der Schaft erstreckt sich vom Anhänger 3 weg zum Lastkraftwagen 3 hin und weist am Ende eine Öse als Kupplungsöse auf, in welche der Kupplungsbolzen 2 des Lastkraftwagens 3 von oben entlang der Längsachse X bzw. der vertikalen Achse eingreifen kann. Die Kupplungsöse und der Kupplungsbolzen 2 verbinden den Lastkraftwagen 3 kraftübertragend in der Längsrichtung X mit dem Anhänger 4.

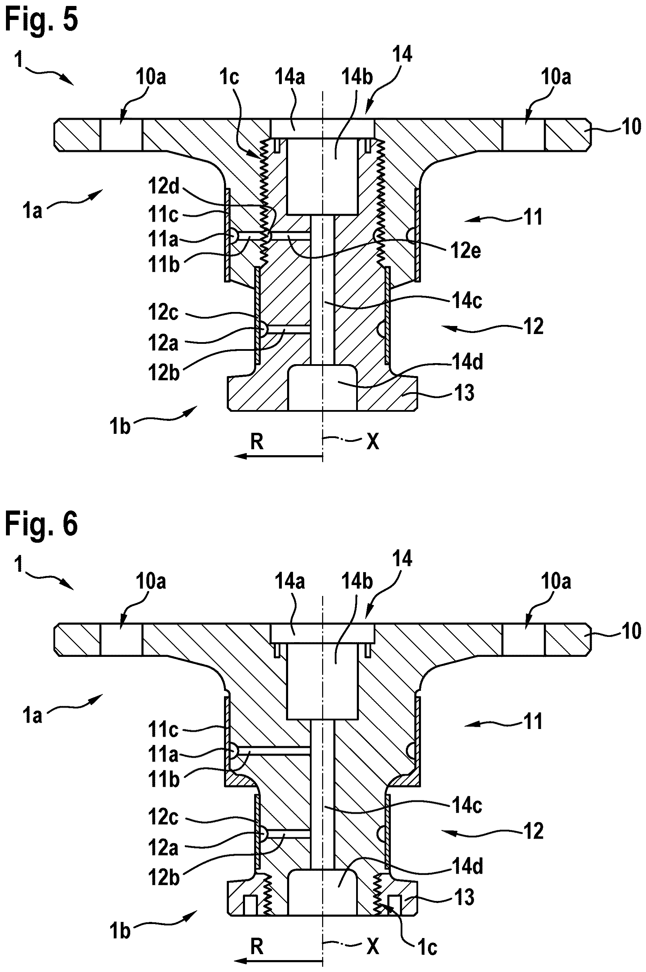

Figur 3 zeigt eine perspektivische Darstellung der erfindungsgemäßen Kupplungsvorrichtung gemäß des ersten Ausführungsbeispiels in Form eines Zugsattelzapfens 1 ohne Verschleißelemente 11c, 12c. Figur 4 zeigt die Darstellung der Figur 3 mit Verschleißelementen 11c, 12c. Figur 5 zeigt einen Längsschnitt der Darstellung der Figur 4.

Der Zugsattelzapfen 1 des Sattelaufliegers 4 der Figur 1 kann auch als Königszapfen 1 oder als Königsbolzen 1 bezeichnet werden. Der Zugsattelzapfen 1 bzw. dessen Körper ist metallisch sowie an sich rotationsymmetrisch zur Längsachse X ausgebildet. Der Zugsattelzapfen 1 ist zweigeteilt ausgebildet und besteht aus einem ersten, oberen Zugsattelzapfenteil 1a und aus einem zweiten, unteren Zugsattelzapfenteil 1b, welche mittels einer Verbindung 1c in Form einer Gewindeverbindung 1c miteinander verbunden sind.

Entlang der Längsachse X von oben nach unten weist der Zugsattelzapfen 1 einen Montageteller 10, einen Übergangsabschnitt 11, einen Einschnürungsabschnitt 12 sowie einen Abschlussbund 13 auf. Im ersten Ausführungsbeispiel weist der erste, obere Zugsattelzapfenteil 1a den Montageteller 10 und den Übergangsabschnitt 11 und das zweite, untere Zugsattelzapfenteil 1b den Einschnürungsabschnitt 12 und den Abschlussbund 13 auf.

Der Montageteller 10 erstreckt sich in der radialen Richtung R deutlich über die übrigen Abschnitte hinaus und ist randseitig vergleichsweise flach entlang der Längsachse X ausgebildet. Dort weist der Montageteller 10 entlang der Längsachse X mehrere Durchgangsöffnungen 10a als Schraubenlöchern 10a des Montagetellers 10 auf, durch welche hindurch der Montageteller 10 an der Unterseite eines Fahrgestells (nicht dargestellt) eines Sattelaufliegers (nicht dargestellt) feststehend mittels Schrauben befestigt werden kann.

Der Montageteller 10 geht stufenlos in den Übergangsabschnitt 11 über, welcher sich vergleichsweise weit entlang der Längsachse X erstreckt und in der radialen Richtung R deutlich geringer als der Montagesteller 10 ausgebildet ist. Der Einschnürungsabschnitt 12 schließt sich dem Übergangsabschnitt 11 stufenlos an und weist eine noch geringere Erstreckung in der radialen Richtung R auf. Der Einschnürungsabschnitt 12 geht stufenlos in den Abschlussbund 13 über, welcher in der radialen Richtung R etwa dem Übergangsabschnitt 11 entspricht und den Zugsattelzapfen 1 entlang der Längsachse X nach unten hin abschließt.

Der Einschnürungsabschnitt 12 wird im angekoppelten Zustand des Sattelaufliegers an einer Sattelzugmaschine (nicht dargestellt) von dessen Sattelkupplung aufgenommen und in der Umfangsrichtung U vollständig umschlossen. Hierdurch kann es im Betrieb des Sattelkraftfahrzeugs mit Sattelauflieger und Sattelzugmaschine zu einem Abrieb bzw. zu einem Verschleiß der zylindrischen Außenfläche des Zugsattelzapfens 1 und insbesondere dessen Einschnürungsabschnitts 12 kommen, welcher im Laufe der Zeit den Querschnitt bzw. die Materialstärke des Zugsattelzapfens 1 derart schwächen kann, dass eine sichere Kraftübertragung zwischen Sattelauflieger und Sattelzugmaschine über den Zugsattelzapfen 1 nicht mehr gewährleistet werden kann.

Ein unzulässig hoher Verschleiß sowohl im Übergangsabschnitt 11 als auch im Einschnürungsabschnitt 12 des Zugsattelzapfens 1 kann gemäß des ersten Ausführungsbeispiels der Figuren 1 bis 3 erfindungsgemäß dadurch erkennt werden, dass der Übergangsabschnitt 11 einen ersten Hohlraum 11a als Umfangskanal 11a aufweist, welcher entlang der Längsachse X etwa mittig in der Umfangsrichtung Z durchgängig ringförmig als radiale Vertiefung ausgebildet ist. An einer Stelle des Umfangskanals 11a des Übergangsabschnitts 11 erstreckt sich ein zweiter Hohlraum 11b als Radialkanal 11b geradlinig radial in den Übergangsabschnitt 11 des Zugsattelzapfens 1 hinein. Aufgrund der Zweiteilung des Zugsattelzapfens 1 endet der Radialkanal 11b des Übergangsabschnitts 11 in einem korrespondierenden Übergangs-Umfangskanal 12d des Einschnürungsabschnitts 12 sowie einem Übergangs-Radialkanal 12e des Einschnürungsabschnitts 12, welcher den Radialkanal 11b des Übergangsabschnitts 11 zur Längsachse X hin verlängert bzw. fortführt.

Ebenso weist der Einschnürungsabschnitt 12 einen ersten Hohlraum 12a in Form eines Umfangskanals 12a des Einschnürungsabschnitts 12 sowie einen zweiten Hohlraum 12b in Form eines Radialkanal 12b des Einschnürungsabschnitts 12 auf.

In der Figur 3 sind der Radialkanal 11b des Übergangsabschnitts 11, der Übergangs-Radialkanal 12e des Einschnürungsabschnitts 12 sowie der Radialkanal 12b des Einschnürungsabschnitts 12 um die Längsachse X herum bzw. in der Umfangsrichtung U gleich ausgerichtet dargestellt. Der Radialkanal 11b des Übergangsabschnitts 11, welcher im ersten Zugsattelzapfenteil 1a ausgebildet ist, kann aufgrund der Gewindeverbindung 1c der beiden Zugsattelzapfenteile 1a, 1b jedoch auch anders gegenüber dem zweiten Zugsattelzapfenteil 1b, welches den Übergangs-Radialkanal 12e des Einschnürungsabschnitts 12 sowie den Radialkanal 12b des Einschnürungsabschnitts 12 aufweist, orientiert sein als dargestellt. Um unabhängig von der Ausrichtung der beiden Zugsattelzapfenteile 1a, 1b zueinander um die Längsachse X herum bzw. in der Umfangsrichtung U dennoch eine fluidführend Verbindung zwischen dem Radialkanal 11b des Übergangsabschnitts 11 des ersten Zugsattelzapfenteils 1a und dem Radialkanal 12b des Einschnürungsabschnitts 12 des zweiten Zugsattelzapfenteils 1b sicherzustellen, ist der Übergangs-Umfangskanal 12d des Einschnürungsabschnitts 12 in der Umfangsrichtung U durchgängig bzw. ringförmig verlaufend vorgesehen.

Entlang der Längsachse X sind im Zugsattelzapfen 1 von oben nach unten in dieser Reihenfolge ein Vertikalhohlraum 14a des Montagetellers 10, ein Vertikalhohlraum 14b des Übergangsabschnitts 11, ein Vertikalhohlraum 14c des Einschnürungsabschnitts 12 sowie ein Vertikalhohlraum 14d des Abschlussbunds 13 in Form von Bohrungen mit unterschiedlichen Durchmesser vorgesehen. Der Vertikalhohlraum 14c des Einschnürungsabschnitts 12 erstreckt sich dabei jedoch etwa zur Hälfte entlang der Längsachse X nach oben in den Übergangsabschnitt 11 hinein. Sowohl der Radialkanal 11b des Übergangsabschnitts 11 bzw. dessen Verlängerung mittels des Übergangs-Radialkanals 12e des Einschnürungsabschnitts 12 als auch der Radialkanal 12b des Einschnürungsabschnitts 12 enden im Vertikalhohlraum 14c des Einschnürungsabschnitts 12, vgl. Figur 3.

Wie zur Verbesserung der Übersichtlichkeit der Figuren 3 und 4 lediglich in der Figur 5 dargestellt, dient auch im ersten Ausführungsbeispiel der Figuren 1 bis 3 der Vertikalhohlraum 14c des Einschnürungsabschnitts 12 als Druckkammer, welche entlang der Längsachse X von unten im Bereich des Vertikalhohlraums 14d des Abschlussbunds 13 mit einem Ventilelement 15 in Form eines Autoventils 15 fluiddicht verschlossen ist. Über das Ventilelement 15 kann ein Fluid, beispielsweise Luft, unter Druck in den Vertikalhohlraum 14c des Einschnürungsabschnitts 12 als Druckkammer eingefüllt und der Druck gehalten werden.

Entlang der Längsachse X von oben wird der Vertikalhohlraum 14c des Einschnürungsabschnitts 12 als Druckkammer von einem Drucksensor 16 in Form eines Druckschalters 16 fluiddicht verschlossen, so dass vom Druckschalter 16 der Druck innerhalb des Vertikalhohlraum 14c des Einschnürungsabschnitts 12 als Druckkammer erfasst werden kann. Dabei kann der Druckschalter 16 zwei unterschiedliche Schaltzustände einnehmen, je nachdem, ob ein vorbestimmter Druckgrenzwert vom Druck innerhalb des Vertikalhohlraums 14c des Einschnürungsabschnitts 12 als Druckkammer unterschritten oder überschritten wird.

Der Druckschalter 16 ist signalübertragend mit einer drahtlosen Sende-/Empfangseinheit 17 verbunden, welche auch einen elektrischen Energiespeicher (nicht dargestellt) in Form einer wiederaufladbaren und bzw. oder austauschbaren Akkumulators aufweist, um sich selbst sowie den Druckschalter 16 elektrisch zu speisen. Die drahtlose Sende-/Empfangseinheit 17 wird nach oben hin staub- und schmutzdicht von einem Deckel 18 verschlossen, welcher mittels Schrauben 19 im Montageteller 10 gehalten wird. Der Deckel 18 schließt nach oben hin flächenbündig mit dem Montageteller 10 ab.

Die drahtlose Sende-/Empfangseinheit 17 kann den Schaltzustand des Drucksensors 16 von diesem erhalten bzw. beim Druckschalter 16 abfragen und regelmäßig, beispielsweise stündlich, und bzw. oder auf Anfrage von außen drahtlos nach außen bzw. nach außerhalb des Zugsattelzapfens 1 übertragen. Dort kann der empfangene Schaltzustand des Drucksensors 16 beispielsweise von einer Motorsteuerung einer Sattelzugmaschine dazu verwendet werden, um den Fahrer über den Schaltzustand des Drucksensors 16 bzw. den hieraus ermittelten Verschleißzustand des Zugsattelzapfens 1 zu informieren, um einen unzulässigen Verschleiß möglichst schnell erkennen und hierauf reagieren zu können.

Die Unterscheidung zwischen einem zulässigen und einem unzulässigen Verschleißzustand des Zugsattelzapfens 1 kann bzw. die entsprechenden Schaltzustände des Drucksensors 16 können erfindungsgemäß ermöglicht werden, indem sowohl der Umfangskanals 11a des Übergangsabschnitts 11 von einem Verschleißelement 11c in Form einer ringförmig geschlossenen Verschleißbuchse 11c des Übergangsabschnitts 11 als auch der Umfangskanals 12a des Einschnürungsabschnitts 12 von einem Verschleißelement 12c in Form einer ringförmig geschlossenen Verschleißbuchse 12c des Einschnürungsabschnitts 12 fluiddicht nach außen bzw. radial verschlossen werden.

Zur Montage der beiden Verschleißbuchsen 11c, 12c sind die beiden Zugsattelzapfenteile 1a, 1b noch getrennt, so dass die Verschleißbuchse 11c des Übergangsabschnitts 11 entlang der Längsachse X von unten auf den Übergangsabschnitts 11 und die Verschleißbuchse 12c des Einschnürungsabschnitts 12 entlang der Längsachse X von oben auf den Einschnürungsabschnitt 12 aufgeschoben werden kann. Die Fluiddichtigkeit kann durch ein anschließendes Aufpressen der Verschleißbuchsen 11c, 12c erreicht werden. Anschließend werden die beiden Zugsattelzapfenteile 1a, 1b zusammengeschraubt, wie bereits erwähnt.

Nun wird der Vertikalhohlraum 14c des Einschnürungsabschnitts 12 als Druckkammer inkl. des Umfangskanals 11a des Übergangsabschnitts 11, des Radialkanals 11b des Übergangsabschnitts 11, des Umfangskanals des Einschnürungsabschnitts 12, des Radialkanals 12b des Einschnürungsabschnitts 12, des Übergangs-Umfangskanal 12d des Einschnürungsabschnitts 12 sowie des Übergangs-Radialkanals 12e des Einschnürungsabschnitts 12 mittels des Ventilelements 15 mit Druckluft gefüllt, welche aufgrund der Fluiddichtigkeit des Ventilelements 15, des Druckschalters 16 sowie der beiden Verschleißbuchsen 11c, 12c nicht aus dem Vertikalhohlraum 14c des Einschnürungsabschnitts 12 als Druckkammer sowie den Kanälen 11a, 11b, 12a, 12b, 12d, 12e entweichen kann.

Da die beiden Verschleißbuchsen 11c, 12c radial genau so weit ausgebildet sind, wie es einer Grenze eines zulässigen Verschleißes des Zugsattelzapfens 1 an dieser Stelle entspricht, dichten die beiden Verschleißbuchsen 11c, 12c den Vertikalhohlraum 14c des Einschnürungsabschnitts 12 als Druckkammer sowie die Kanäle 11a, 11b, 12a, 12b, 12d, 12e solange fluiddicht ab, wie der Verschleiß des Zugsattelzapfens 1 an dieser Stelle in einem zulässigen Maß liegt. Daher bleibt der Druckschalter 16 im entsprechenden Schalterzustand, solange die Fluiddichtigkeit gegeben ist und somit der Überdruck von beispielsweise 6 Bar bis 8 Bar am Druckschalter 16 anliegt.

Kommt es nun im Laufe des Betriebes des Zugsattelzapfens 1 zu einer verschleißbedingten Undichtigkeit an irgendeiner Stelle einer der beiden Verschleißbuchsen 11c, 12c, so tritt hierdurch Luft aus dem Vertikalhohlraum 14c des Einschnürungsabschnitts 12 als Druckkammer sowie aus den Kanälen 11a, 11b, 12a, 12b, 12d, 12e nach außen hin aus, wodurch der Überdruck des Fluids bzw. der Luft rapide abnimmt. Hierdurch wird der Druckgrenzwert bzw. die Druckschwelle des Druckschalters 16 unterschritten und der Druckschalter 16 geht in den entsprechenden anderen Schalterzustand über, was von der drahtlosen Sende-/Empfangseinheit 17 nach außen hin kommuniziert werden kann, insbesondere genau beim Eintreten der Änderung des Schalterzustands des Druckschalters 16.

Somit kann der Fahrer der Sattelzugmaschine über den eingetreten unzulässigen Verschleiß des Zugsattelzapfens 1 informiert werden, um hierauf zu reagieren. So kann nach Ende des aktuellen Betriebs die unzulässig weit verschlissene Verschleißbuchse 11c, 12c ausgetauscht und der Vertikalhohlraum 14c des Einschnürungsabschnitts 12 als Druckkammer wieder mit Druckluft gefüllt werden.

Aufgrund der in der Umfangsrichtung U durchgängig ausgebildeten Umfangskanäle 11a, 12a kann das Entweichen der unter Überdruck stehenden Luft überall in der Umfangsrichtung U erfolgen und jeweils das Umschalten des Druckschalters 16 auslösen. Auf diese Art und Weise kann eine in der Umfangsrichtung U vollständige und lückenlose bzw. stufenlose Verschleißdetektion erfolgen.

Figur 6 zeigt einen Längsschnitt eines erfindungsgemäßen Zugsattelzapfens 1 gemäß des zweiten Ausführungsbeispiels.

In diesem Fall weist der erste, obere Zugsattelzapfenteil 1a den Montageteller 10, den Übergangsabschnitt 11 und den Einschnürungsabschnitt 12 und das zweite, untere Zugsattelzapfenteil 1b den Abschlussbund 13 auf. Auf diese Art und Weise kann der Radialkanal 11b des Übergangsabschnitts 11 durchgängig bis in den Vertikalhohlraum 14c des Einschnürungsabschnitts 12 ausgeführt werden, was den Fertigungsaufwand gegenüber dem ersten Ausführungsbeispiel reduzieren kann, da auf den Übergangs-Umfangskanal 12d des Einschnürungsabschnitts 12 sowie auf den Übergangs-Radialkanal 12e des Einschnürungsabschnitts 12 verzichtet werden kann.

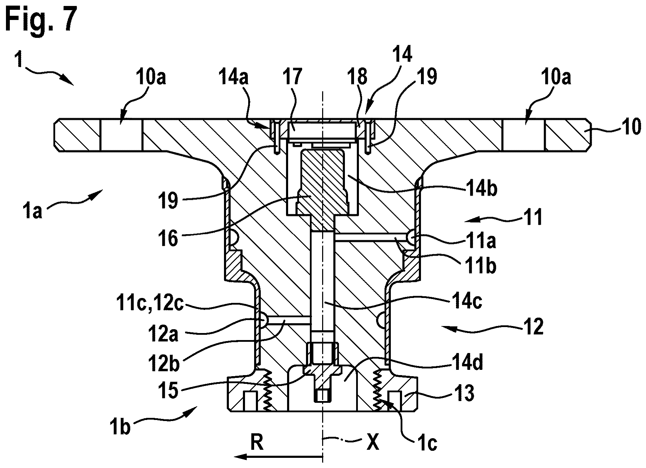

Figur 7 zeigt einen Längsschnitt eines erfindungsgemäßen Zugsattelzapfens 1 gemäß des dritten Ausführungsbeispiels.

Auch in diesem Fall weist der erste, obere Zugsattelzapfenteil 1a den Montageteller 10, den Übergangsabschnitt 11 und den Einschnürungsabschnitt 12 und das zweite, untere Zugsattelzapfenteil 1b den Abschlussbund 13 auf, so dass auch in diesem Fall der Radialkanal 11b des Übergangsabschnitts 11 durchgängig bis in den Vertikalhohlraum 14c des Einschnürungsabschnitts 12 ausgeführt werden kann.

Im Unterschied zu den vorangehenden beiden Ausführungsbeispielen ist eine durchgängige Verschleißbuchse 11c, 12c vorgesehen, was den Montagaufwand reduzieren kann. Ferner ist der Radialkanal 11b des Übergangsabschnitts 11 um 180° um die Längsachse X versetzt gegenüber dem Radialkanal 12b des Einschnürungsabschnitts 12 angeordnet.

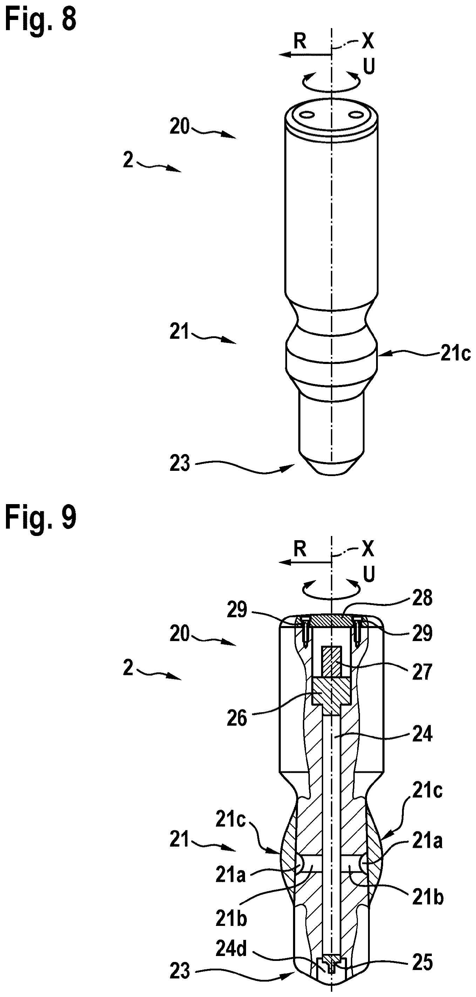

Figur 8 zeigt eine perspektivische Darstellung der erfindungsgemäßen Kupplungsvorrichtung 2 gemäß des vierten Ausführungsbeispiels in Form eines Kupplungsbolzens 2 mit Verschleißelement 21c. Figur 9 zeigt einen Längsschnitt der Darstellung der Figur 8.

In diesem Fall wird die erfindungsgemäße Kupplungsvorrichtung 2 vergleichbar dem Zugsattelzapfen 1 der ersten drei Ausführungsbeispiele mittels des Kupplungsbolzens 2 des Lastkraftwagens 3 der Figur 2 umgesetzt.

Der erfindungsgemäße Kupplungsbolzen 2 ist im Wesentlichen metallisch einstückig, d.h. integral bzw. aus einem Stück hergestellt, ausgebildet und weist eine im Wesentlichen zylindrische Form auf, welche sich entlang der Längsachse X erstreckt. Ein entlang der Längsachse X oberer Abschnitt stellt einen Montageabschnitt 20 dar, welcher der feststehenden Befestigung in der entsprechenden Aufnahme der Kupplungsaufnahme des Lastkraftwagens 3 dient, wie hinsichtlich der Figur 2 bereits beschrieben.

Entlang der Längsachse X nach unten schließt sich dem Montageabschnitt 20 ein Kupplungsabschnitt 21 vergleichbarer Länge an, welcher unten mit einem Abschlussbund 23 endet. Der Kupplungsabschnitt 21 ist radial geringer ausgebildet als der Montageabschnitt 20 und weist etwa in seiner oberen Hälfte eine radial hervorstehende Verdickung auf, welche in ihrer Mitte entlang der Längsachse X radial dem Montageabschnitt 20 entspricht sowie entlang der Längsachse Y nach oben und nach unten schräg zur radial geringeren Erstreckung des Kupplungsabschnitts 21 hin abfällt, d.h. sich verjüngt. Diese radial hervorstehende Verdickung kann als balliger Abschnitt bezeichnet werden, welcher erfindungsgemäß von einem Verschleißelement 21c in Form einer Verschleißbuchse 21c des Kupplungsabschnitts 21 gebildet wird.

Erfindungsgemäß weist auch der Kupplungsbolzen 2 bzw. dessen Kupplungsabschnitt 21 einen ersten Hohlraum 21a in Form eines Umfangskanal 21a des Kupplungsabschnitts 21 auf, welcher entlang der Längsachse X mittig entlang der Verschleißbuchs 21c ausgebildet ist und von der Verschleißbuchse 21c nach außen hin fluiddicht bzw. luftdicht verschlossen wird. Ebenso weist der Kupplungsbolzen 2 bzw. dessen Kupplungsabschnitt 21 einen zweiten Hohlraum 21b in Form eines Radialkanal 21b des Kupplungsabschnitts 21 auf, welche sich radial durch den Kupplungsabschnitt 21 hindurch erstreckt und den Umfangskanal 21a somit zur Längsachse X diametral gegenüberliegend zweifach erreicht bzw. in den Umfangskanal 21a jeweils fluidführend übergeht. Entsprechend verbindet der Radialkanal 21b bzw. dessen beide Abschnitte den Umfangskanal 21a mit einem Vertikalhohlraum 24, welcher sich entlang der Längsachse X vom Abschlussbund 23 unten bis zum oberen Ende des Montageabschnitts 20 erstreckt und als Kernbohrung 24 ausgebildet ist. Dabei ist der Vertikalhohlraum 24 im Bereich des Abschlussbundes 23 radial breiter als Vertikalhohlraum 24d des Abschlussbunds 23 ausgebildet. Ebenso weist der obere Abschnitt des Vertikalhohlraums 24 ein radial größeres Volumen auf.

Auch bei dem Kupplungsbolzen 2 als erfindungsgemäße Kupplungsvorrichtung 2 findet eine Überwachung des Verschleißzustands des Kupplungsbolzens 2 bzw. dessen Kupplungsabschnitts 21 mittels eines sensorisch erfassbaren bzw. erkennbaren Überdrucks von beispielsweise 6 Bar bis 8 Bar statt, indem die Kernbohrung 24 als Druckkammer sowie der Umfangskanal 21a und der Radialkanal 21b mit Luft mit Überdruck gefüllt und dann luftdicht verschlossen werden, was mittels eines Ventilelements 25 in Form eines Autoventils 25 erfolgen kann, welches im Vertikalhohlraum 24d des Abschlussbunds 23 angeordnet ist.

Entlang der Längsachse X ist dem Ventilelement 25 gegenüberliegend am anderen Ende des Vertikalhohlraums 24 ein Drucksensor 26 als Druckschalter 26 angeordnet und mit seinem Sensorelement zur Druckkammer bzw. zum Vertikalhohlraum 24 hin ausgerichtet, um in Abhängigkeit des dort vorliegenden Drucks zwischen zwei Zuständen umzuschalten. Eine drahtlose Sende-/Empfangseinheit 27 ist ebenfalls an diesem Ende des Vertikalhohlraums 24 angeordnet und signalübertragend mit dem Drucksensor 26 verbunden. Dort ist auch ein elektrischer Energiespeicher zur elektrischen Speisung des Drucksensors 26 und der drahtlosen Sende-/Empfangseinheit 27 vorgesehen. Dieses Ende des Vertikalhohlraums 24 ist mittels eines Deckels 28, welcher von Schrauben 29 gehalten wird, nach außen hin fluiddicht verschlossen, um vor Schmutz und Feuchtigkeit geschützt zu werden.

Entsprechend bleibt der Druckschalter 26 im Schalterzustand eines Überdrucks, solange die Fluiddichtigkeit gegeben ist und somit der Überdruck am Druckschalter 26 anliegt. Kommt es jedoch im Laufe des Betriebes des Kupplungsbolzens 2 zu einer verschleißbedingten Undichtigkeit an irgendeiner Stelle der Verschleißbuchse 21c, so tritt hierdurch Luft aus dem Vertikalhohlraum 24 als Druckkammer sowie aus den Kanälen 21a, 21b nach außen hin aus, wodurch der Überdruck des Fluids bzw. der Luft rapide abnimmt. Hierdurch wird der Druckgrenzwert bzw. die Druckschwelle des Druckschalters 26 unterschritten und der Druckschalter 26 geht in den entsprechenden anderen Schalterzustand über, was von der drahtlosen Sende-/Empfangseinheit 27 nach außen hin kommuniziert werden kann, insbesondere genau beim Eintreten der Änderung des Schalterzustands des Druckschalters 26.

### BEZUGSZEICHENLISTE (Teil der Beschreibung)

- A: Fahrtrichtung; Bewegungsrichtung; Zugrichtung
- R: radiale Richtung
- U: Umfangsrichtung
- X: Längsachse
- 1: Kupplungsvorrichtung; Zugsattelzapfen; Königszapfen; Königsbolzen
- 1a: erster, oberer Zugsattelzapfenteil
- 1b: zweiter, unterer Zugsattelzapfenteil
- 1c: Verbindung bzw. Gewindeverbindung zwischen Zugsattelzapfenteilen 1a, 1b
- 10: Montageteller
- 10a: Durchgangsöffnungen bzw. Schraubenlöchern des Montagetellers 10
- 11: Übergangsabschnitt
- 11a: erster Hohlraum bzw. Umfangskanal des Übergangsabschnitts 11
- 11b: zweiter Hohlraum bzw. Radialkanal des Übergangsabschnitts 11
- 11c: Verschleißelement bzw. Verschleißbuchse des Übergangsabschnitts 11
- 12: Einschnürungsabschnitt
- 12a: erster Hohlraum bzw. Umfangskanal des Einschnürungsabschnitts 12
- 12b: zweiter Hohlraum bzw. Radialkanal des Einschnürungsabschnitts 12
- 12c: Verschleißelement bzw. Verschleißbuchse des Einschnürungsabschnitts 12
- 12d: Übergangs-Umfangskanal des Einschnürungsabschnitts 12
- 12e: Übergangs-Radialkanal des Einschnürungsabschnitts 12
- 13: Abschlussbund
- 14: Vertikalhohlraum; Kernbohrung
- 14a: Vertikalhohlraum des Montagetellers 10
- 14b: Vertikalhohlraum des Übergangsabschnitts 11
- 14c: Vertikalhohlraum des Einschnürungsabschnitts 12
- 14d: Vertikalhohlraum des Abschlussbunds 13
- 15: Ventilelement; Autoventil
- 16: Drucksensor; Druckschalter
- 17: (drahtlose) Sende-/Empfangseinheit
- 18: Deckel
- 19: Schrauben
- 2: Kupplungsvorrichtung; Kupplungsbolzen
- 20: Montageabschnitt
- 21: Kupplungsabschnitt
- 21a: erster Hohlraum bzw. Umfangskanal des Kupplungsabschnitts 21
- 21b: zweiter Hohlraum bzw. Radialkanal des Kupplungsabschnitts 21
- 21c: Verschleißelement bzw. Verschleißbuchse des Kupplungsabschnitts 21 balliger Abschnitt
- 23: Abschlussbund
- 24: Vertikalhohlraum; Kernbohrung
- 24d: Vertikalhohlraum des Abschlussbunds 23
- 25: Ventilelement; Autoventil
- 26: Drucksensor; Druckschalter
- 27: (drahtlose) Sende-/Empfangseinheit
- 28: Deckel
- 29: Schrauben
- 3, 4: Fahrzeugverbund; Gespann; Sattelzug bzw. Sattelkraftfahrzeug; Lastzug
- 3: in Zugrichtung A vorderes Fahrzeug; Zugfahrzeug; Sattelzugmaschine; Lastkraftwagen
- 4: in Zugrichtung A hinteres Fahrzeug; Sattelauflieger; Anhänger
- 5: Untergrund

## Patentansprüche

1. Kupplungsvorrichtung (1; 2) für einen Fahrzeugverbund (3, 4), vorzugsweise Zugsattelzapfen (1) für einen Sattelauflieger (4) eines Sattelkraftfahrzeugs (3, 4) oder für einen Kupplungsbolzen (2) für ein Zugfahrzeug (3) eines Lastzugs (3, 4),
welche sich im Wesentlichen entlang einer Längsachse (X) erstreckt,
mit wenigstens einem Verschleißdetektionsmittel, welches senkrecht zur Längsachse (X) ausgerichtet derart in der Kupplungsvorrichtung (1; 2) angeordnet ist, sodass ein Verschleiß der Kupplungsvorrichtung (1; 2) senkrecht zur Längsachse (X) optisch und/oder sensorisch erkannt werden kann,
**dadurch gekennzeichnet, dass**
das Verschleißdetektionsmittel aufweist:
• wenigstens ein Verschleißelement (11c, 12c; 21c), welches senkrecht zur Längsachse (X) ausgerichtet derart in und/oder an der Kupplungsvorrichtung (1; 2) angeordnet ist, sodass ein Verschleiß der Kupplungsvorrichtung (1; 2) senkrecht zur Längsachse (X) gleichermaßen oder ausschließlich das Verschleißelement (11c; 12c; 21c) verschleißt,
wobei das Verschleißelement (11c, 12c; 21c) in der Umfangsrichtung (U) zumindest abschnittsweise, vorzugsweise vollständig, um die Kupplungsvorrichtung (1; 2) herum angeordnet ist,
• wenigstens einen Hohlraum (11a, 11b, 12a, 12b, 14c; 21a, 21b, 24), welcher sich in der Umfangsrichtung (U) korrespondierend zum Verschleißelement (11c, 12c; 21c) erstreckt,
wobei der Hohlraum (11a, 11b, 12a, 12b, 14c; 21a, 21b, 24) vom Verschleißelement (11c, 12c; 21c), vorzugsweise senkrecht zur Längsachse (X), fluiddicht verschlossen wird, und
• wenigstens einen Drucksensor (16; 26), welcher ausgebildet ist, den Druck des Fluids im
Hohlraum (11a, 11b, 12a, 12b, 14c; 21a, 21b, 24) zu erfassen,
wobei das Verschleißelement (11c, 12c; 21c) senkrecht zur Längsachse (X) derart dimensioniert ist, sodass das Fluid durch eine verschleißbedingt erzeugte Durchgangsöffnung des Verschleißelements (11c, 12c; 21c) entweichen kann, wenn eine Verschleißgrenze der Kupplungsvorrichtung (1; 2) an dieser Stelle der Kupplungsvorrichtung (1; 2) erreicht wird.

2. Kupplungsvorrichtung (1; 2) nach Anspruch 1,
wobei sich das Verschleißelement (11c, 12c; 21c) senkrecht zur Längsachse (X) derart weit erstreckt, wie es einer Verschleißgrenze der Kupplungsvorrichtung (1; 2) an dieser Stelle der Kupplungsvorrichtung (1; 2) entspricht,
wobei der Hohlraum (11a, 11b, 12a, 12b, 14c; 21a, 21b, 24) senkrecht zur Längsachse (X) hinter dem Verschleißelement (11c, 12c; 21c) angeordnet ist.

3. Kupplungsvorrichtung (1; 2) nach Anspruch 1 oder 2,
wobei der Hohlraum (11a, 11b, 12a, 12b, 14c; 21a, 21b, 24) aufweist:
• wenigstens einen ersten Hohlraum (11a, 12a; 21a) als Umfangskanal (11a, 12a; 21a), welcher sich zumindest abschnittsweise, vorzugsweise vollständig, in der Umfangsrichtung (U) um die Kupplungsvorrichtung (1; 2) herum erstreckt, und
• wenigstens einen zweiten Hohlraum (11b, 12b; 21b) als Radialkanal (11b, 12b; 21b), welcher sich senkrecht zur Längsachse (X) geradlinig vom ersten Hohlraum (11a, 12a; 21a) weg in die Kupplungsvorrichtung (1; 2) hinein erstreckt,
wobei der Drucksensor (16; 26) ausgebildet ist, den Druck des Fluids in den zweiten Hohlraum (11b, 12b; 21b) gerichtet zu erfassen.

4. Kupplungsvorrichtung (1; 2) nach Anspruch 3,
wobei der Hohlraum (11a, 11b, 12a, 12b, 14c; 21a, 21b, 24) ferner aufweist:
• wenigstens einen Vertikalhohlraum (14c; 24), welcher sich entlang der Längsachse (X) in der Kupplungsvorrichtung (1; 2), vorzugsweise in einem Einschnürungsabschnitt (12) des Zugsattelzapfens (1), erstreckt,
wobei der Drucksensor (16; 26) ausgebildet ist, den Druck des Fluids in den Vertikalhohlraum (14c; 24) gerichtet zu erfassen.

5. Kupplungsvorrichtung (1; 2) nach einem der vorangehenden Ansprüche,
wobei die Kupplungsvorrichtung (1) ein Zugsattelzapfen (1) ist,
wobei der Zugsattelzapfen (1) entlang seiner Längsachse (X) in diese Reihenfolge aufweist:
• einen Montageteller (10), welcher ausgebildet ist, mit dem Sattelauflieger verbunden zu werden,
• einen Übergangsabschnitt (11), welcher sich dem Montageteller (10) anschließt,
• einen Einschnürungsabschnitt (12), welcher sich dem Übergangsabschnitt (11) anschließt und welcher zur formschlüssigen Verbindung mit einer Sattelkupplung einer Sattelzugmaschine des Sattelkraftfahrzeugs ausgebildet ist, und
• einen Abschlussbund (13), welcher sich dem Einschnürungsabschnitt (12) anschließt und welcher den Zugsattelzapfen (1) nach unten hin abschließt,
wobei das Verschleißelement (11c, 12c) im Übergangsabschnitt (11) und/oder im Einschnürungsabschnitt (12) angeordnet ist.

6. Kupplungsvorrichtung (1; 2) nach Anspruch 5,
wobei das Verschleißelement (11c, 12c) in der Umfangsrichtung (U) um den Zugsattelzapfen (1) herum vollständig geschlossen ausgebildet ist,
wobei der Zugsattelzapfen (1) wenigstens, vorzugsweise genau, zweigeteilt mit einem ersten, oberen Zugsattelzapfenteil (1a) und mit einem zweiten, unteren Zugsattelzapfenteil (1b) ausgebildet ist,
wobei der zweite, untere Zugsattelzapfenteil (1b) wenigstens, vorzugsweise genau, den Abschlussbund (13) aufweist,
wobei der erste, obere Zugsattelzapfenteil (1a) und der zweite, untere Zugsattelzapfenteil (1b) mittels einer Verbindung (1c), vorzugsweise mittels einer Gewindeverbindung (1c), feststehend miteinander verbunden sind.

7. Kupplungsvorrichtung (1; 2) nach Anspruch 5 oder 6,
wobei der Übergangsabschnitt (11) ein erstes Verschleißelement (11c), vorzugsweise mit einem ersten Hohlraum (11a) und mit einem zweiten Hohlraum (11b), aufweist,
wobei der Einschnürungsabschnitt (12) ein zweites Verschleißelement (12c), vorzugsweise mit einem ersten Hohlraum (12a) und mit einem zweiten Hohlraum (12b), aufweist.

8. Kupplungsvorrichtung (1; 2) nach einem der vorangehenden Ansprüche,
wobei die Kupplungsvorrichtung (2) ein Kupplungsbolzen (2) ist,
wobei der Kupplungsbolzen (2) einen Kupplungsabschnitt (21) mit einem balligen Abschnitt aufweist, welcher ausgebildet ist, von einem Kupplungsauge einer Kupplungsöse aufgenommen zu werden,
wobei der ballige Abschnitt des Kupplungsabschnitts (21) zumindest abschnittsweise, vorzugsweise vollständig, vom Verschleißelement (21c) gebildet wird,
wobei das Verschleißelement (21c) vorzugsweise den balligen Abschnitt des Kupplungsabschnitts (21) alleinig ausbildet und/oder als Verschleißbuchse (21c) ausgebildet ist.

9. Kupplungsvorrichtung (1; 2) nach einem der vorangehenden Ansprüche,
ferner mit einer, vorzugsweise drahtlosen, Sendeeinheit (17; 27), welche wenigstens signalübertragend mit dem Drucksensor (16; 26) verbunden ist, um wenigstens eine Information hinsichtlich des Drucks des Fluids im Hohlraum (11a, 11b, 12a, 12b, 14c; 21a, 21b, 24) zu erhalten,
wobei die, vorzugsweise drahtlose, Sendeeinheit (17; 27) ferner ausgebildet ist, die erhaltene Information des Drucks nach außerhalb der Kupplungsvorrichtung (1; 2), vorzugsweise drahtlos, auszusenden.

10. Kupplungsvorrichtung (1; 2) nach Anspruch 9,
wobei die ausgesendete Information des Drucks der Sendeeinheit (17; 27) den Druck des Fluids im Hohlraum (11a, 11b, 12a, 12b, 14c; 21a, 21b, 24) und/oder eine aus dem Druck des Fluids im Hohlraum (11a, 11b, 12a, 12b, 14c; 21a, 21b, 24) abgeleitete Information aufweist.

11. Kupplungsvorrichtung (1; 2) nach Anspruch 9 oder 10,
mit mehreren Verschleißelementen (11c, 12c; 21c) mit jeweils wenigstens einem Hohlraum (11a, 11b, 12a, 12b, 14c; 21a, 21b, 24) und mit jeweils wenigstens einem Drucksensor (16; 26),
wobei die von der, vorzugsweise drahtlosen, Sendeeinheit (17; 27) ausgesendete Information des Drucks vorzugsweise eine Identifikation des jeweiligen Drucksensors (16; 26) enthält.

12. Kupplungsvorrichtung (1; 2) nach einem der Ansprüche 9 bis 11,
wobei die, vorzugsweise drahtlose, Sendeeinheit (17; 27) eine, vorzugsweise drahtlose, Sende-/Empfangseinheit (17; 27) ist,
wobei die, vorzugsweise drahtlose, Sende-/Empfangseinheit (17; 27) ausgebildet ist, vorzugsweise drahtlos, zum Aussenden der Information des Drucks von außerhalb der Kupplungsvorrichtung (1; 2) aufgefordert zu werden.

13. Kupplungsvorrichtung (1; 2) nach einem der vorangehenden Ansprüche,
ferner mit einem Leuchtmittel, welches wenigstens signalübertragend mit dem Drucksensor (16; 26) verbunden ist,
wobei das Leuchtmittel ausgebildet ist, in Abhängigkeit des Druck des Fluids im Hohlraum (11a, 11b, 12a, 12b, 14c; 21a, 21b, 24) betrieben zu werden.

14. Kupplungsvorrichtung (1; 2) nach einem der vorangehenden Ansprüche,
wobei der Drucksensor (16; 26) ein Druckschalter (16; 26) ist, welcher ausgebildet ist, in Reaktion auf einen vorbestimmten Druckabfall des Fluids im Hohlraum (11a, 11b, 12a, 12b, 14c; 21a, 21b, 24) zu schalten.

15. Fahrzeug (3; 4), vorzugsweise Sattelauflieger (4) oder Zugfahrzeug (3), mit einer Kupplungsvorrichtung (1; 2), vorzugsweise einem Zugsattelzapfen (1) oder einem Kupplungsbolzen (2), nach einem der vorangehenden Ansprüche.
